(19) Europäisches Patentamt / European Patent Office / Office européen des brevets

(11) **EP 3 221 660 B1**

(12) **FASCICULE DE BREVET EUROPEEN**

(45) Date de publication et mention
de la délivrance du brevet:
**19.09.2018 Bulletin 2018/38**

(21) Numéro de dépôt: **15787916.4**

(22) Date de dépôt: **16.10.2015**

(51) Int Cl.:
***G01B 11/24*** *(2006.01)*

(86) Numéro de dépôt international:
**PCT/EP2015/074011**

(87) Numéro de publication internationale:
**WO 2016/078841 (26.05.2016 Gazette 2016/21)**

(54) **PROCEDE ET DISPOSITIF DE CARACTERISATION EN TROIS DIMENSIONS D'UNE SURFACE D'UN OBJET**

VERFAHREN UND VORRICHTUNG ZUR DREIDIMENSIONALEN CHARAKTERISIERUNG DER OBERFLÄCHE EINES OBJEKTS

METHOD AND DEVICE FOR THE THREE-DIMENSIONAL CHARACTERISATION OF A SURFACE OF AN OBJECT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.11.2014 FR 1461310**

(43) Date de publication de la demande:
**27.09.2017 Bulletin 2017/39**

(73) Titulaire: **SYNCHROTRON SOLEIL
91190 St Aubin (FR)**

(72) Inventeurs:
• **KUBSKY, Stefan**
**F-91400 Orsay (FR)**
• **LESTRADE, Alain**
**F-91190 Gif sur Yvette (FR)**
• **JOBERT, Nicolas**
**F-94110 Arcueil (FR)**
• **ENGBLOM, Christer**
**F-91300 Massy (FR)**
• **ALVES, Filipe**
**F-91190 Gif-sur-Yvette (FR)**

(74) Mandataire: **IPAZ
Parc Les Algorithmes, Bâtiment Platon
CS 70003 Saint-Aubin
91192 Gif-sur-Yvette Cedex (FR)**

(56) Documents cités:
**DE-A1-102006 031 142     DE-U1-202005 018 753
US-B1- 6 205 243**

**Description**

**Domaine technique**

La présente invention concerne un procédé de caractérisation en trois dimensions d'une surface d'un objet. Elle concerne aussi un dispositif mettant en oeuvre ce procédé.

Un tel dispositif ou procédé peut permettre par exemple à un utilisateur de réaliser une topographie ou une caractérisation en trois dimensions d'une surface d'un objet à une résolution nanométrique, avec caractérisation indépendante et simultanée de son support rotatif. Le domaine de l'invention est plus particulièrement mais de manière non limitative celui de la caractérisation de la surface d'un objet typiquement avec une résolution en hauteur inférieure à 10 nm et/ou la caractérisation de la surface d'un objet destiné à être placé avec précision en intersection avec un faisceau de radiation (corpusculaire ou électromagnétique).

**Etat de la technique antérieure**

On connaît de nombreuses technologies permettant de caractériser en trois dimensions la surface d'un objet :

- interférométrie,
- capteurs capacitifs,
- télémétrie laser,
- etc.

Le problème actuel avec toutes ces technologies est qu'elles possèdent toutes un défaut et qu'on ne peut pas trouver de compromis idéal entre :

- l'aire de couverture de la caractérisation,
- la résolution spatiale de la caractérisation,
- la rapidité à laquelle la caractérisation est effectuée,
- le budget mis en oeuvre.

DE 20 2005 018753 U1 décrit un dispositif de caractérisation d'un objet.

Le but de la présente solution est de proposer un dispositif et un procédé de caractérisation en trois dimensions d'une surface d'un objet permettant:

- une large la couverture de la caractérisation de l'objet (de préférence à 360° autour de l'objet), et
- une bonne résolution spatiale de la caractérisation (de préférence inférieure à 10nm), et
- une bonne rapidité à laquelle la caractérisation est effectuée (de préférence 30 minutes ou moins),

tout ça simultanément, et tout en limitant autant que possible le budget mis en oeuvre.

**Exposé de l'invention**

Cet objectif est atteint avec un procédé de caractérisation en trois dimensions d'un objet, comprenant :

- une fourniture de l'objet,
- une acquisition de données de distances comprenant :

  ◦ pour au moins deux plans de mesure distincts, chaque plan de mesure étant équipé d'au moins trois capteurs de distance entourant l'objet, et
  ◦ pour chaque capteur de distance de chaque plan de mesure,

  une mesure d'une donnée de distance représentative d'une distance entre une surface extérieure de l'objet et ce capteur de distance mesurée dans le plan de mesure du capteur,
- une réitération de l'acquisition de données de distances pour plusieurs valeurs de rotation de l'objet autour d'un axe de rotation par rapport à un référentiel de distance dans lequel les capteurs de distance sont fixes,
- pour chaque plan de mesure, une obtention de données représentatives d'une ligne de contour de l'objet à partir des données de distances mesurées par tous les capteurs de ce plan de mesure et pour différentes valeurs de rotation de l'objet autour de son axe de rotation, la ligne de contour étant contenue dans ce plan de mesure, (ladite

EP 3 221 660 B1

obtention de données représentatives d'une ligne de contour comprenant de préférence une prise en compte d'une variation d'inclinaison et/ou de translation de l'axe de rotation dans le référentiel de distance lors des acquisitions des données de distance),

- pour chaque plan de mesure parmi au moins un des plans de mesure, une acquisition, par un capteur d'image, d'une image tridimensionnelle d'une face de l'objet, ce plan de mesure étant imagé sur cette image tridimensionnelle, et une réitération de cette acquisition d'image pour plusieurs valeurs de rotation de l'objet autour de son axe de rotation face à ce capteur d'image dans un référentiel d'image dans lequel le capteur d'image est fixe,

- pour chaque plan de mesure ayant fait l'objet d'acquisition d'images tridimensionnelles, un assemblage de différentes images tridimensionnelles acquises pour ce plan de mesure, de manière à obtenir des données tridimensionnelles d'une surface de contour de l'objet, l'assemblage comprenant une définition de positions relatives des différentes images au moyen des données représentatives de la ligne de contour contenue dans ce plan de mesure.

La définition des positions relatives des images tridimensionnelles peut comprendre, pour chaque image tridimensionnelle d'un plan de mesure, un algorithme des moindres carrés minimisant un écart entre :

- les données représentatives de la ligne de contour de l'objet contenue dans ce plan de mesure, et
- cette image tridimensionnelle de ce plan de mesure.

Le procédé selon l'invention peut comprendre, avant l'assemblage des différentes images tridimensionnelles, une orientation de chaque image tridimensionnelle par rapport aux autres images tridimensionnelles, cette orientation étant déterminée en fonction d'une variation d'inclinaison de l'objet par rapport au référentiel d'image lors de l'acquisition de ces différentes images tridimensionnelles.

L'objet peut s'étendre le long d'un axe d'élongation, l'axe d'élongation et l'axe de rotation formant de préférence un angle inférieur à 0,01 radian, de manière encore plus préférentielle inférieur ou égal à 0,005 radian.

L'objet peut être monté sur un support thermiquement stabilisé et monté en rotation autour de l'axe de rotation, le procédé comprenant de préférence en outre une vérification de la stabilisation d'une température de l'objet avec des variations de température en dessous d'un seuil d'écart de température.

Chaque capteur d'image peut comprendre un interféromètre à lumière blanche et/ou un microscope à contraste de foyer.

Les capteurs de distance peuvent être des capteurs interférométriques et les données de distances sont des données interférométriques.

Les capteurs de distance et le capteur d'image sont de préférence solidaires d'un même bâti, l'objet étant monté sur une platine de déplacement agencée pour la rotation de l'objet autour de l'axe de rotation par rapport à ce bâti.

Suivant encore un autre aspect de l'invention, il est proposé un dispositif de caractérisation, comprenant :

- une zone d'objet,
- des moyens pour acquérir des données de distances, ces moyens d'acquisition de données de distances étant répartis sur au moins deux plans de mesure distincts, chaque plan de mesure étant équipé d'au moins trois capteurs de distance entourant la zone d'objet, chaque capteur de distance étant agencé pour mesurer dans son plan de mesure une donnée de distance représentative d'une distance entre :

  • une surface extérieure d'un objet disposé dans la zone d'objet en étant solidaire de la zone d'objet et
  • ce capteur de distance

et cela pour différentes valeurs de rotation de la zone d'objet autour d'un axe de rotation par rapport à un référentiel de distance dans lequel les capteurs de distance sont fixes,

- pour chaque plan de mesure, des moyens pour obtenir des données représentatives d'une ligne de contour de l'objet à partir de données de distances acquises comprenant des données de distances mesurées par tous les capteurs de ce plan de mesure et pour différentes valeurs de rotation de la zone d'objet autour de son axe de rotation, cette ligne de contour étant contenue dans ce plan de mesure (les moyens d'obtention de données représentatives d'une ligne de contour étant de préférence agencés pour une prise en compte d'une variation d'inclinaison et/ou de translation de l'axe de rotation dans le référentiel de distance lors d'acquisitions des données de distance),

- pour chaque plan de mesure parmi au moins un des plans de mesure, un capteur d'image agencé pour acquérir une image tridimensionnelle d'une face de l'objet disposé dans la zone d'objet, ce plan de mesure étant imagé sur cette image tridimensionnelle, le capteur d'image étant agencé pour réitérer l'acquisition d'image pour plusieurs valeurs de rotation de la zone d'objet autour de son axe de rotation face à ce capteur d'image dans un référentiel d'image dans lequel le capteur d'image est fixe,

- pour chaque plan de mesure parmi au moins un des plans de mesure, des moyens pour assembler différentes

3

images tridimensionnelles acquises pour ce plan de mesure, de manière à obtenir des données tridimensionnelles d'une surface de contour de l'objet, les moyens d'assemblage étant agencés pour définir les positions relatives des différentes images au moyen des données représentatives de la ligne de contour contenue dans ce plan de mesure.

Les moyens d'assemblage peuvent être agencés pour que la définition des positions relatives des images tridimensionnelles comprend, pour chaque image tridimensionnelle d'un plan de mesure, un algorithme des moindres carrés minimisant un écart entre :

- les données représentatives de la ligne de contour de l'objet contenue dans ce plan de mesure, et
- cette image tridimensionnelle de ce plan de mesure.

Le dispositif selon l'invention peut comprendre des moyens agencés pour, avant un assemblage de différentes images tridimensionnelles, orienter chaque image tridimensionnelle par rapport aux autres images tridimensionnelles en fonction d'une variation d'inclinaison de la zone d'objet par rapport au référentiel d'image lors de l'acquisition de ces différentes images tridimensionnelles.

Le dispositif selon l'invention peut comprendre un support pour la zone d'objet, ledit support étant monté en rotation autour de l'axe de rotation, ledit support comprenant des moyens de stabilisation thermique, le dispositif comprenant de préférence en outre des moyens de vérification de la stabilisation d'une température de la zone d'objet avec des variations en température en dessous d'un seuil d'écart de température.

Chaque capteur d'image peut comprendre un interféromètre à lumière blanche et/ou un microscope à contraste de foyer.

Les capteurs de distance sont de préférence des capteurs interférométriques et les données de distances sont de préférence des données interférométriques.

Les capteurs de distance et le capteur d'image sont de préférence solidaires d'un même bâti, la zone d'objet étant montée sur une platine de déplacement agencée pour la rotation de la zone d'objet autour de l'axe de rotation par rapport à ce bâti.

**Description des figures et modes de réalisation**

D'autres avantages et particularités de l'invention apparaîtront à la lecture de la description détaillée de mises en oeuvre et de modes de réalisation nullement limitatifs, et des dessins annexés suivants :

- la figure 1 est une vue de profil d'un premier mode de réalisation de dispositif 1 selon l'invention, qui est le mode de réalisation préféré de l'invention,
- la figure 2 est une vue de dessus du dispositif 1 selon l'invention,
- la figure 3 est une vue de profil du support 3 situé au centre du dispositif 1 selon l'invention, ce support 3 comprenant des platines de microdéplacements en translation et en rotation, et portant un objet 5 à caractériser,
- la figure 4 illustre une ligne de contour de l'objet 5 dans un plan de mesure 81 ou 82 vu de dessus,
- la figure 5 illustre un exemple d'objet 5 à caractériser et les positions des deux plans de mesure 81, 82 et de capteurs d'images 15, 151, 152 par rapport à cet objet 5,
- la figure 6 est une vue de dessus de l'objet 5 et de plusieurs images 191 à 196 acquises par le capteur d'image 151 ou 152,
- la figure 7 illustre l'image 191 « vue de dessus » acquise par le capteur d'image 151 ou 152,
- la figure 8 illustre l'image 191 « vue de face » acquise par le capteur d'image 151 ou 152,
- la figure 9 illustre l'image 192 « vue de dessus » acquise par le capteur d'image 151 ou 152,
- la figure 10 illustre l'image 192 « vue de face » acquise par le capteur d'image 151 ou 152,
- la figure 11 illustre l'assemblage des images 191 et 192,
- la figure 12 illustre différentes positions 38, 39 de l'objet 5 en rotation autour de l'axe de rotation 4, pour une première position des platines de positionnement 35, 36 de la figure 3, et
- la figure 13 illustre différentes positions 40, 41 de l'objet 5 en rotation autour de l'axe de rotation 4, pour une deuxième position des platines de positionnement 35, 36 de la figure 3.

Ces modes de réalisation étant nullement limitatifs, on pourra notamment considérer des variantes de l'invention ne comprenant qu'une sélection de caractéristiques décrites ou illustrées par la suite isolées des autres caractéristiques décrites ou illustrées (même si cette sélection est isolée au sein d'une phrase comprenant ces autres caractéristiques), si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, et/ou avec seulement une partie des détails structurels si cette partie uniquement est suffisante pour conférer un avantage technique ou à différencier l'invention par rapport à l'état de la technique antérieure.

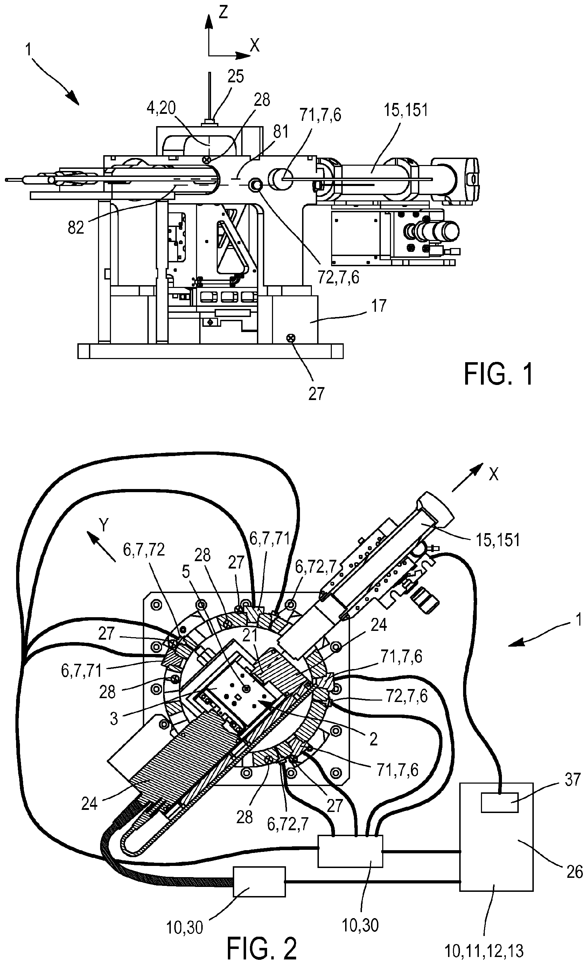

On va maintenant décrire, en référence aux figures 1 à 13, un mode de réalisation préférentiel de dispositif 1 selon l'invention pour caractériser en trois dimensions un objet 5.

Le dispositif 1 consiste en une combinaison avantageuse de méthodes optiques et numériques : un dispositif circulaire portant un certain nombre de capteurs interférométriques 7 arrangés en deux niveaux 81, 82 distants de quelques millimètres, à raison d'au moins trois capteurs 7 par niveau, plus une mesure de hauteur (par un capteur de hauteur 25), a été conçu.

Au centre de ce dispositif 1 se trouve un support ou système 3 de nano positionnement avec :

- trois axes linéaires (XYZ),
- un moyen de rotation 31 dans le plan horizontal et
- une platine linéaire XY horizontale,

le support 3 portant un ensemble constitué :

- d'un objet 5 porte échantillon, et
- d'un échantillon 23 porté par l'objet 5,

cet ensemble étant monté sur le moyen de rotation 31 autour d'un axe 4.

Dans cette configuration les capteurs interférométriques 7 peuvent balayer la surface de l'ensemble 5, 23 angulairement pas-à-pas. Ils peuvent mesurer en outre la convolution entre la forme de l'ensemble 5, 23 et les erreurs de la rotation. Pour améliorer la précision et pour pouvoir réellement modéliser l'ensemble, même pour des échantillons 23 non-réfléchissants, on utilise de manière complémentaire dans le même dispositif circulaire deux méthodes optiques : au moins un capteur 15 comprenant un interféromètre à lumière blanche (WLI) et un microscope à contraste de foyer, ce dernier étant adapté aux échantillons 23 structurés mais non réfléchissants. Ces deux méthodes optiques sont intégrées dans un assemblage qui ressemble à un microscope optique. D'autres méthodes complémentaires, tel que par exemple le nano-GPS (Horiba Jobin-Yvon), sont intégrables dans le dispositif 1 ainsi que dans le processus de traitement de données.

Les différents capteurs 7, 15 permettent de faire une cartographie de l'ensemble 5, 23. Il est par contre nécessaire de déconvoluer les contributions venant des erreurs (reproductibles et non reproductibles) géométriques de la rotation (autour de l'axe 4) de celles qui sont fixes et qui représentent la forme extérieure de l'ensemble 5, 23. Par cette approche on arrive à décrire numériquement a) l'ensemble 5, 23 et b) les erreurs du moyen de rotation 31.

De manière plus détaillée, le dispositif 1 comprend une zone d'objet 2. Cette zone d'objet est située approximativement au centre du dispositif 1.

Le dispositif 1 comprend le support 3 pour la zone d'objet.

La zone d'objet 2 est agencée pour accueillir l'objet 5 de sorte que cet objet 5 soit en contact et solidaire du support 3.

Le support 3 est monté en rotation autour de l'axe de rotation 4.

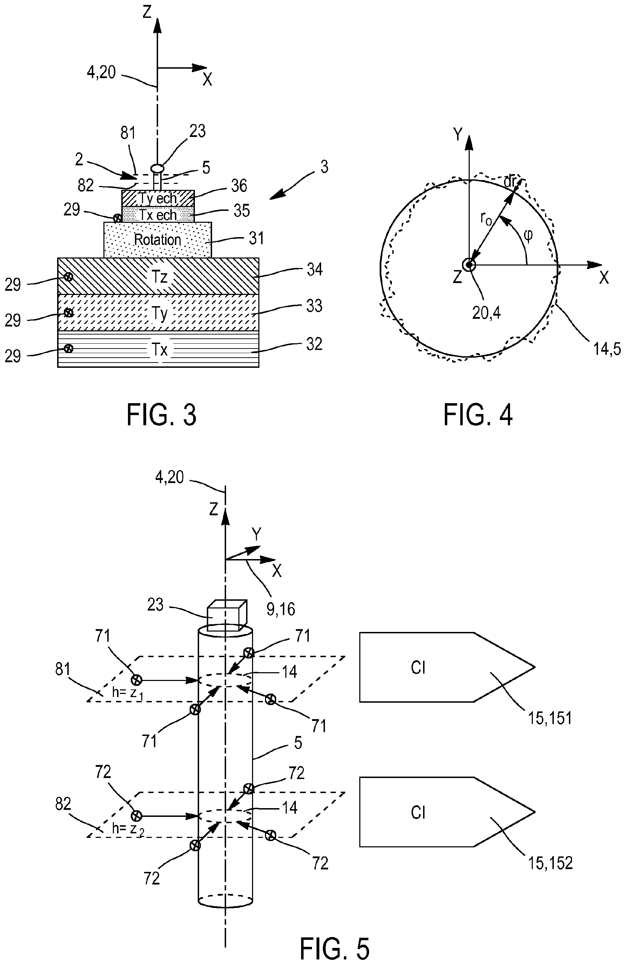

Le support 3 (illustré sur la figure 3) comprend le moyen de rotation 31 qui est une platine 31 de rotation autour de l'axe 4, de référence Smaract modèle SR2812 et de pas angulaire inférieur ou égal à 0,018 radians.

Le support 3 comprend :

- Une platine 32 de déplacement selon un axe horizontal X, de référence AEROTECH modèle ANT95 et ayant un pas de 1nm,
- Une platine 33 de déplacement selon un axe horizontal Y perpendiculaire à l'axe X, de référence Physikalische Instrumente (PI) modèle LPS65 et ayant un pas de 1nm,
- Une platine 34 de déplacement selon un axe vertical Z perpendiculaire aux axes X et Y, de référence Physikalische Instrumente (PI) modèle LPS65 et ayant un pas de 1nm,
- Une platine 35 de déplacement selon l'axe horizontal X, de référence Smaract modèle SLC1720 et ayant un pas de 1nm, et située entre le moyen de rotation 31 et la zone 2 ou l'objet 5,
- Une platine 36 de déplacement selon l'axe horizontal Y perpendiculaire à l'axe X, de référence Smaract modèle SLC1720 et ayant un pas de 1nm, et située entre le moyen de rotation 31 et la zone 2 ou l'objet 5.

Le support 3 (et le bâti 17) est muni de moyens de stabilisation thermique, comprenant par exemple plusieurs éléments chauffants. Chaque élément chauffant est par exemple une feuille de chauffage 60x47mm$^2$ (marque : THERMO, dénomination Thermo Folien Heizung60X47). Chaque élément chauffant est placé au plus proche d'une source de chaleur qui lui est associée parmi les capteurs optiques intégrés ainsi que les moteurs des platines 31 à 36, et cet élément chauffant chauffe uniquement lorsque la source de chaleur à laquelle elle est associée ne fonctionne pas ou ne chauffe pas au-dessus d'un certain seuil.

Le dispositif 1 comprend des moyens 6 pour acquérir des données de distances comprenant plusieurs capteurs 7.

Les moyens 6 d'acquisition de données de distances sont répartis sur au moins deux plans de mesure distincts 81 et 82.

Deux plans de mesures voisins 81, 82 sont typiquement distants le long de l'axe Z d'une distance comprise entre 3 et 6 millimètres.

Quel que soit leur nombre, les plans de mesures 81, 82 sont parallèles.

Chaque plan 81, 82 est parallèle aux axes X et Y.

L'axe de rotation 4 est sensiblement vertical.

Chaque plan de mesure 81, 82 est horizontal.

Chaque plan de mesure 81 ou 82 est sensiblement perpendiculaire à l'axe de rotation 4. Plus exactement, l'axe de rotation 4 est et reste sensiblement perpendiculaire à chaque plan de mesure 81, 82 à plus ou moins 10 milli radians.

Chaque plan de mesure 81, 82 est équipé d'au moins trois (de préférence au moins quatre) capteurs 7 de distance (référencés 71 peur le plan 81 et 72 pour le plan 82) entourant la zone d'objet 2. Chaque capteur de distance (respectivement 71 ou 72) est agencé pour mesurer (par interférométrie) dans son plan de mesure (respectivement 81 ou 82) une donnée de distance représentative d'une distance contenue dans ce plan (respectivement 81 ou 82) entre :

- une surface extérieure de l'objet 5 disposé dans la zone d'objet 2 en étant solidaire de la zone d'objet 2, et
- ce capteur de distance (respectivement 71 ou 72)

et cela pour différentes valeurs de rotation de la zone d'objet 2 et donc de l'objet 5 autour de l'axe de rotation 4 par rapport à un référentiel de distance 9 (défini par les axes orthogonaux X, Y et Z) dans lequel les capteurs de distance 71 et 72 sont fixes.

Autrement dit, chaque capteur 71 ou 72 mesure la distance entre lui-même et la surface extérieure de l'objet 5 dans son plan de mesure 81 ou 82.

Chaque capteur 7 de distance est un capteur « ponctuel » ou unidirectionnel, fournissant non pas une information avec deux ou trois dimensions spatiales, mais une information selon uniquement une dimension spatiale, plus exactement une distance entre une surface extérieure de l'objet 5 et ce capteur de distance 7.

Chaque capteur 7 a une résolution spatiale pour cette mesure de distance (entre une surface extérieure de l'objet 5 et ce capteur de distance) inférieure à 10 nm, idéalement inférieure à 1 nm.

Chaque capteur 7 comprend un interféromètre comprenant :

- une tête « passive » (collimateur-focalisant) "Attocube standard" pour le plan de mesure inférieur 82 et "Attocube flexure head" pour le plan de mesure supérieur 81, et
- un boitier FPS3010 (unité de contrôle) de la marque Attocube reliée à la tête « passive » par une fibre optique.

Chaque capteur 7 à un diamètre d'intégration (typiquement taille de spot pour la mesure interférométrique) sur l'objet 5 typiquement inférieur à $100 \mu m$.

Les capteurs 7, 71, 72 de distance sont des capteurs interférométriques (typiquement dans l'infrarouge) et les données de distances sont des données interférométriques.

Le dispositif 1 comprend des moyens de calcul et de commande 10. Les moyens 10 sont des moyens techniques, et comprennent au moins un ordinateur, une unité centrale ou de calcul, un circuit électronique analogique (de préférence dédié), un circuit électronique numérique (de préférence dédié), et/ou un microprocesseur (de préférence dédié), et/ou des moyens logiciels. De manière plus détaillée, les moyens 10 comprennent un ordinateur 26 muni d'une carte graphique 37.

Le dispositif 1 comprend, pour chaque plan de mesure (respectivement 81 ou 82), des moyens 11 pour obtenir des données représentatives d'une ligne de contour 14 de l'objet 5 à partir de données de distances acquises par les moyens 6, ces données comprenant des données de distances mesurées par tous les capteurs (respectivement 71 ou 72) de ce plan de mesure (respectivement 81 ou 82) et pour différentes valeurs de rotation de la zone d'objet 2 et donc de l'objet 5 autour de son axe de rotation 4. Cette ligne de contour 14 (illustrée sur la figure 4) est contenue dans ce plan de mesure (respectivement 81 ou 82), et délimite tout ou partie de la surface extérieure de l'objet 5 dans ce plan de mesure (respectivement 81 ou 82). La ligne de contour 14 dans le plan 81 ou 82 est de préférence une boucle fermée faisant tout le tour de l'objet 5 à 360° autour de l'axe 4, mais peut dans une version plus limitée ne suivre qu'une partie d'intérêt de la surface extérieure de l'objet 5 dans le plan 81 ou 82.

Les moyens 11 comprennent typiquement les moyens 10 de calcul et de commande.

Les moyens 11 d'obtention de données représentatives d'une ligne de contour 14 sont agencés pour une prise en compte d'une variation d'inclinaison et/ou de translation de l'axe de rotation 4 (ou de l'objet 5 ou de la zone 2) dans le référentiel de distance 9 lors des l'acquisition des données de distance notamment lors de la rotation de la zone 2 ou de l'objet 5 autour de l'axe 4. Cette variation d'inclinaison et/ou de translation dans le référentiel de distance 9 est due aux imperfections du moyen de rotation 31 typiquement à l'échelle du nanomètre ou de quelques nanomètres.

La variation d'inclinaison de l'axe de rotation 4 dans le référentiel de distance 9 a de préférence une amplitude inférieure à 5 µradians pour un groupe de N mesures de distance par un capteur 71 ou 72.

La variation de translation de l'axe de rotation 4 dans le référentiel de distance 9 a de préférence une amplitude inférieure à 10 micromètres pour un groupe de N mesures de distance par un capteur 71 ou 72.

Le dispositif 1 comprend, pour chaque plan de mesure (respectivement 81 ou 82) parmi au moins un des plans de mesure, un capteur d'image 15 (respectivement 151 ou 152) agencé pour acquérir une image tridimensionnelle 191 d'une face de l'objet 5, ce plan de mesure (respectivement 81 ou 82) étant imagé sur cette image tridimensionnelle, le capteur d'image (respectivement 151 ou 152) étant agencé pour réitérer l'acquisition d'image tridimensionnelles 192 à 196 pour plusieurs valeurs de rotation de la zone d'objet 2 et donc de l'objet 5 autour de son axe de rotation 4 face à ce capteur d'image (respectivement 151 ou 152) dans un référentiel d'image 16 dans lequel le capteur d'image (respectivement 151 ou 152) est fixe.

Chaque capteur d'image 151, 152 comprend :

- un interféromètre à lumière blanche (WLI) de référence GBS Ilmenau « Smart WLI » dont l'optique d'entrée faisant face à l'objet 5 est modifié pour avoir une longue distance de travail d'environ 20 mm, et
- un microscope à contraste de foyer de marque Phaseview de modèle Zeescan.

Selon le mode de réalisation, le dispositif 1 peut comprendre (comme illustré sur la figure 5):

- Uniquement un capteur d'image 151 fixe pour le plan 81, ou
- Uniquement un capteur d'image 152 fixe pour le plan 82, ou
- Un capteur d'image 15 mobile le long de l'axe Z par rapport à l'objet 5 pour au moins deux positions le long de l'axe Z correspondant aux plans 81 et 82, ce capteur 15 jouant le rôle des deux capteurs 151 et 152 ; dans ce cas, pour déplacer le capteur 15 par rapport à l'objet 5 le long de l'axe Z, on déplace l'objet 5 au moyen de la platine 34 et on contrôle la position de l'objet 5 au moyen du capteur interférométrique 25 de hauteur qui vise l'objet 5 ; ou
- Un capteur d'image 151 fixe pour le plan 81 et un capteur d'image 152 fixe pour le plan 82 et distinct du capteur 151.

Les capteurs de distance 7, 71, 72 et chaque capteur d'image 151, 152 sont solidaires d'un même bâti 17 et de préférence immobiles.

Les référentiels de distance 9 et d'image 16 sont confondus.

La zone d'objet 2 ou l'objet 5 est donc monté sur le moyen de rotation 31 qui est agencé pour la rotation de la zone d'objet 2 ou de l'objet 5 autour de l'axe de rotation 4 par rapport à ce bâti 17.

Le bâti 17 est par exemple en acier inoxydable de 1 à 5 cm d'épaisseur.

Le dispositif 1 comprend en outre des moyens de vérification de la stabilisation d'une température de la zone d'objet 2 avec des variations en dessous d'un seuil d'écart de température $\Delta T$. $\Delta T$ est de préférence inférieure ou égal à un milli Kelvin. Ces moyens de vérification de la stabilisation de la température comprennent typiquement plusieurs capteurs NTC de type Thermistances EPCOS S861/5k/F40 (référence constructeur B578S502/F/040), et dont la position de chacun est référencée 27, 28 ou 29 :

- Trois capteurs 27 sur le bâti 17 en position « basse » (forte épaisseur du bâti 17 et fuite thermique du « sol »)
- Trois capteurs 28 sur le bâti 17 en position « haute » (faible épaisseur du bâti 17)
- Quatre capteurs 29 sur les moyens de déplacement 3.

Si chaque capteur 27, 28, 29 a une température mesurée stable à un milli Kelvin près, alors on considère que la zone 2 et l'objet 5 ont une température éventuellement différente des points de mesure des capteurs 27, 28 29 mais qui est aussi stable au milli Kelvin près.

Chaque capteur 27, 28, 29 est agencé pour vérifier une stabilité de température entre $T_{ref}$-$\Delta T$ et $T_{ref}$+$\Delta T$ (la température de référence $T_{ref}$ pouvant varier selon le point de mesure c'est-à-dire selon le capteur 27, 28, 29). Chaque capteur de température peut avoir une température de référence différente de celle des autres capteurs de température. La température de référence de chaque capteur de température peut être définie comme la température mesurée par ce capteur de température en début d'une série d'acquisition de données de distance par les capteurs 7 et d'images par le capteur 151 et/ou 152.

De préférence, le dispositif 1 comprend donc des moyens de vérification de la stabilisation des gradients de température entre plusieurs points de mesure de température (sur le dispositif 1) en dessous d'un seuil d'écart de température ΔT (typiquement égal à 1 mK).

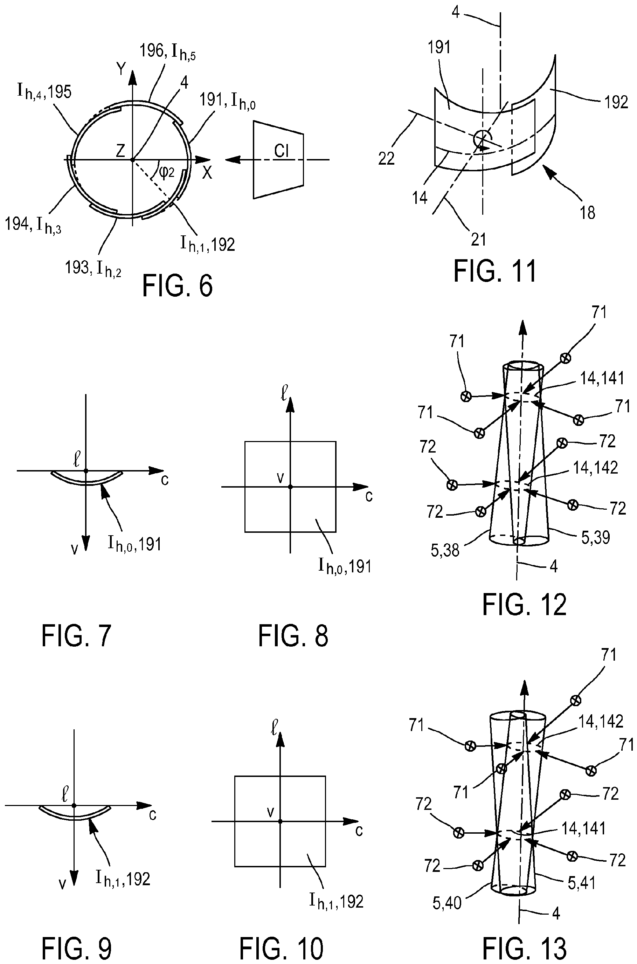

Le dispositif 1 comprend des moyens 12 pour, avant un assemblage de différentes images tridimensionnelles 191 à 196 acquises par le capteur 151 ou 152, orienter (typiquement dans le référentiel d'image 16) chaque image tridimensionnelle par rapport aux autres images tridimensionnelles auxquelles elle doit être assemblée, cette orientation étant réalisée en fonction d'une variation d'inclinaison de la zone d'objet 2 ou de l'objet 5 par rapport au référentiel d'image 16 lors de l'acquisition de ces différentes images tridimensionnelles 191 à 196, notamment lors de la rotation de la zone 2 ou de l'objet 5 autour de l'axe 4. Cette variation d'inclinaison est définie selon deux angles autour de deux axes perpendiculaires, ces deux axes (illustrés sur la figure 11) comprenant l'axe optique 21 (parallèle au plan respectivement 81 ou 82) du capteur d'image (respectivement 151 ou 152) ayant pris ces images 191 à 196 et un axe 22 perpendiculaire à cet axe optique 21.

Les moyens 12 comprennent typiquement les moyens 10 de calcul et de commande.

Le dispositif 1 comprend, pour chaque plan de mesure (respectivement 81 ou 82) parmi au moins un des plans de mesure, des moyens 13 pour assembler différentes images tridimensionnelles 191 à 196 acquises (par le capteur respectivement 151 ou 152) pour ce plan de mesure (respectivement 81 ou 82), de manière à obtenir des données tridimensionnelles d'une surface de contour 18 (illustrée sur la figure 6) de l'objet 5, les moyens d'assemblage étant agencés pour définir les positions relatives des différentes images 191 à 196 au moyen des données représentatives de la ligne de contour 14 contenue dans ce plan de mesure (respectivement 81 ou 82). La surface de contour 18 est de préférence une surface fermée « en ruban » faisant tout le tour de l'objet 5 à 360° autour de l'axe 4, mais peut dans une version plus limitée ne suivre qu'une partie d'intérêt de la surface extérieure de l'objet 5.

Les moyens 13 comprennent typiquement les moyens 10 de calcul et de commande.

Les moyens d'assemblage 13 sont agencés pour que la définition des positions relatives des images tridimensionnelles comprenne, pour chaque image tridimensionnelle d'un plan de mesure (respectivement 81 ou 82), un algorithme des moindres carrés minimisant un écart entre :

-   les données représentatives de la ligne de contour 14 de l'objet contenue dans ce plan de mesure (respectivement 81 ou 82), et
-   cette image tridimensionnelle de ce plan de mesure (respectivement 81 ou 82).

On va maintenant décrire, toujours en référence aux figures 1 à 13, un procédé selon l'invention de caractérisation en trois dimensions de l'objet 5 mis en oeuvre par le dispositif 1.

Fourniture de l'objet 5

Ce procédé comprend tout d'abord une fourniture de l'objet 5 au sein du dispositif 1.

Chaque ligne de contour 14 et chaque surface de contour 18 est de préférence une ligne de contour ou une surface de contour d'une partie d'intérêt de l'objet 5, cette partie d'intérêt ayant une forme modélisable par des coordonnées cylindriques $(r, \varphi, z)$ autour d'un l'axe d'élongation 20 de l'objet 5, de sorte que pour cette partie d'intérêt, pour chaque hauteur $z$ donnée le long de l'axe d'élongation 20 et pour chaque angle $\varphi$ donné autour de l'axe d'élongation dans un plan perpendiculaire à cet axe d'élongation 20, il n'existe qu'une seule valeur possible de rayon $r$ entre l'axe d'élongation 20 et la surface extérieure de l'objet 5.

Cet objet 5 a une partie ayant de préférence quasiment (i.e. à quelques variations micrométriques près) une forme d'un cylindrique de rayon $r_0$ s'étendant le long de l'axe d'élongation 20 sensiblement parallèlement à l'axe de rotation 4. L'axe de révolution de ce cylindre et l'axe de rotation 4 sont sensiblement confondus à quelques imperfections d'alignement près.

La partie de l'objet 5 ayant une forme sensiblement cylindrique est de préférence un cylindre en laiton (hauteur 10 à 50 millimètres, diamètre $r_0$ 3 à 20 millimètres).

L'objet 5 porte à son sommet un échantillon 23 destiné à être placé ultérieurement en intersection avec un faisceau de radiation (corpusculaire ou électromagnétique).

L'objet 5 s'étend le long de l'axe d'élongation 20 (qui correspond ici à un axe de révolution du cylindre de rayon $r_0$), l'axe d'élongation 20 et l'axe de rotation 4 formant un angle inférieur à 0,01 radian, de manière encore plus préférentielle inférieur ou égal à 0,005 radian.

Vérification de la température.

L'objet 5 est monté sur le support 3 thermiquement stabilisé et monté en rotation autour de l'axe de rotation 4.

Ce procédé comprend une vérification (par les moyens de vérification de la stabilisation de la température 27, 28, 29) de la stabilisation d'une température de l'objet 5 avec des variations en dessous d'un seuil d'écart de température (1mK), et ce pendant toutes les étapes d'acquisition de données de distance et d'acquisition d'images tridimensionnelles. Ces moyens de vérification de la stabilisation de la température comprennent typiquement plusieurs capteurs de température 27, 28, 29 (un capteur de température par point de mesure) comme décrit précédemment.

Il peut exister des gradients de température entre les différents capteurs de température, ce qui importe alors sera la stabilité de ces gradients en dessous d'une variation d'un milli kelvin pendant toutes les étapes d'acquisition de données de distance et d'acquisition d'images tridimensionnelles.

De préférence, le procédé comprend donc une vérification de la stabilité des gradients de température entre plusieurs points de mesure de température du dispositif 1 en dessous d'un seuil d'écart de température $\Delta T$.

Alignement de l'objet 5 (et son axe d'élongation) avec l'axe de rotation 4.

Pour faire correspondre le plus possible l'axe d'élongation 20 de l'objet 5 et l'axe de rotation 4 du moyen de rotation 31, le dispositif 1 comprend des moyens 24 pour mesurer la position de l'objet 5 par rapport à l'axe 4 du moyen de rotation 31, cette position étant ajustée par les moyens de translation 35 et 36 pour minimiser la distance (de préférence inférieure à 100 nm) entre l'axe d'élongation 20 de l'objet 5 et l'axe de rotation 4 du moyen de rotation 31.

Les moyens de mesure 24 comprennent un appareil de référence LS-9000 de chez KeyEnce.

Les moyens de mesure 24 sont situés en dessous du niveau des plans 81 et 82 pour ne pas gêner les mesures dans ces plans 81, 82 par les capteurs 7, 151, 152.

Par la suite, la portion de cylindre de l'objet 5 mesurée par les capteurs 71 ou 72 est supposée centrée sur l'axe de rotation 4 (décalage entre les axes 4 et 20 quasi nul): ceci est obtenu de manière fine en faisant une première série de mesures de distances par les capteurs 71 ou 72 et en minimisant l'harmonique d'ordre 1 de la décomposition de Fourier des lectures des capteurs 71 ou 72 correspondants.

Acquisition des données de distance.

Ce procédé comprend ensuite une acquisition (par les moyens 6) de données de distances comprenant :

- pour au moins deux plans de mesure distincts 81 et 82, chaque plan de mesure (respectivement 81 ou 82) étant équipé d'au moins trois capteurs de distance (respectivement 71 ou 72) entourant l'objet 5, et
- pour chaque capteur de distance (respectivement 71 ou 72) de chaque plan de mesure (respectivement 81 ou 82),

une mesure (par interférométrie) d'une donnée de distance représentative d'une distance (contenue dans ce plan respectivement 81 ou 82) entre une surface extérieure de l'objet 5 et ce capteur de distance mesurée dans le plan de mesure de ce capteur (respectivement 71 ou 72).

Ce procédé comprend une réitération de l'acquisition de données de distances pour plusieurs valeurs de rotation de l'objet 5 autour de l'axe de rotation 4 par rapport au référentiel de distance 9 dans lequel les capteurs de distance 71 et 72 sont fixes. A chaque itération, les données de distance sont mesurées simultanément sur tous les plans de mesure 81 et 82 et pour tous les capteurs 7 de ces plans de mesure.

Le spot de chaque interféromètre 7 sur l'objet 5 se déplace typiquement à une vitesse moyenne (continue ou discontinue) de l'ordre de 100 $\mu$m. s$^{-1}$.

Les données acquises par les capteurs 7 sont notées $S_{h,k}(\varphi)$ avec:

- $S$, une distance (typiquement en nm)

- $\varphi \in [0,2\pi]$ en radians, angle de rotation de l'objet 5 autour de l'axe 4 par pas de $\dfrac{2\pi}{N}$ radians
- $N$ le nombre de points de mesure (i.e. le nombre d'itérations), N étant de préférence un nombre entier pair et de préférence une puissance de 2, et étant typiquement égal à cent ou à quelques centaines (typiquement entre 100 et 300) pour un objet 5 dont la partie quasi cylindrique a un diamètre d'environ 3 millimètres et avec chaque capteur 7 ayant un diamètre d'intégration $\phi_{int}$ d'environ 100 micromètres (ou moins),
- $k \in [1,4]$ , un entier positif correspondant au numéro du capteur à l'intérieur de son plan 81 ou 82
- $h \in \{z_1, z_2\}$ les deux hauteurs de mesure sur l'objet 5 (en $\mu$m)

Ainsi $S_{h,k}(\varphi)$ est la distance, contenue dans le plan de mesure 81 (h=z1) ou 82 (h=z2) situé à la hauteur h le long de l'axe Z, entre :

- La surface extérieure de l'objet 5, et

- Le capteur n°k du plan de mesure 81 (h=z1) ou 82 (h=z2) situé à la hauteur h le long de l'axe Z

pour la position angulaire φ de l'objet 5 autour de son axe de rotation 4. Cependant, de manière générale, une donnée de distance $S_{h,k}(φ)$ n'est pas nécessairement en nm, mais peut par exemple être une donnée interférométrique en unité arbitraire et proportionnelle à cette distance.

Chaque plan de mesure 81 ou 82 est défini par sa hauteur h le long de l'axe Z, avec h=z1 pour le plan de mesure 81 ou h=z2 pour le plan de mesure h=z2.

Pour chaque plan de mesure de hauteur h, chaque capteur 7 est définie par son numéro k.

L'objet 5 est défini par sa position angulaire φ autour de son axe de rotation 4 au moment d'une mesure de donnée de distance.

Obtention de données représentatives de la ligne de contour 14.

Ce procédé comprend, pour chaque plan de mesure (respectivement 81 ou 82), une obtention (par les moyens 11) de données représentatives de la ligne de contour 14 de l'objet 5 à partir des données de distances mesurées par tous les capteurs (respectivement 71 ou 72) de ce plan de mesure (respectivement 81 ou 82) et pour différentes valeurs de rotation φ de l'objet 5 autour de son axe de rotation 4, la ligne de contour 14 étant contenue dans ce plan de mesure (respectivement 71 ou 72), ladite obtention de données comprenant une prise en compte d'une variation d'inclinaison et/ou de translation de l'axe de rotation 4 (ou de l'objet 5 ou de la zone 2) dans le référentiel de distance 9 lors de l'acquisition des données de distance et notamment lors de la rotation de la zone 2 ou de l'objet 5 autour de l'axe 4, c'est-à-dire entre les différentes itérations de l'acquisition de données de distances.

Les étapes suivantes décrivent la procédure de mesure de circularité (ou obtention de la ligne de contour 14) de l'objet 5 à chacun des niveaux $h = z_1$ et $h = z_2$ en prenant en compte la variation d'inclinaison et/ou de translation de l'axe de rotation 4 (ou de l'objet 5 ou de la zone 2) dans le référentiel de distance 9 lors de la rotation de la zone 2 ou de l'objet 5 autour de l'axe 4. On omet à partir d'ici l'indice h, considérant que la description qui va suivre est applicable au cas h=z1 pour le plan de mesure 81 ou h=z2 pour le plan de mesure h=z2.

Pour obtenir des données représentatives de la ligne de contour 14 de l'objet 5 dans un plan de mesure (respectivement 81 ou 82), il faut utiliser une série de mesures de distances dans ce plan de mesure (respectivement 81 ou 82) qui ont été mesurées alors que la position de l'axe de rotation 4 était bien centrée par rapport à l'objet 5 dans ce plan 81 ou 82:

- la figure 12 illustre la position de l'axe de rotation 4 par rapport à l'objet 5 pour les mesures par les capteurs 71 dans le plan 81 ; cette configuration est obtenue en faisant une ou plusieurs série(s) de mesures de distance par les capteurs 71 avec une rotation de l'objet 5 atour de son axe 4 et en minimisant l'harmonique d'ordre 1 de la décomposition de Fourier des lectures des capteurs 71 ; et
- la figure 13 illustre la position de l'axe de rotation 4 par rapport à l'objet 5 pour les mesures par les capteurs 72 dans le plan 82 ; cette configuration est obtenue en faisant une ou plusieurs série(s) de mesures de distance par les capteurs 72 avec une rotation de l'objet 5 atour de son axe 4 et en minimisant l'harmonique d'ordre 1 de la décomposition de Fourier des lectures des capteurs 72.

A chaque pas de rotation $φ$, chaque capteur 7 d'un plan de mesure 81 ou 82 voit:

- Les composantes $x(φ)$ et $y(φ)$ du déplacement de l'axe de rotation 4 dans ce plan de mesure
  La variation de rayon dr($φ$) de la partie quasi cylindrique de l'objet 5.

L'équation générale des lectures des capteurs 7 est :

$$s_k(φ) = x(φ).cos\,φ_k + y(φ).sin\,φ_k + dr(φ - φ_k)$$

$φ_k$ étant la position angulaire de chaque capteur k (71 ou 72) autour de l'axe de rotation 4 dans le référentiel 9 ou 16, cette position angulaire $φ_k$ ne variant pas lors de la rotation de l'objet 5 autour de l'axe 4.

La solution ($x,y,dr$) de cette équation passe par la transformée de Fourier:

$$s_k(\varphi) = x(\varphi).cos\varphi_k + y(\varphi).sin\varphi + dr(\varphi - \varphi_k) \quad \overset{TF}{\Leftrightarrow}$$

$$S_{k_n} = X_n.\cos\varphi_k + Y_n.\sin\varphi_k + dR_n.e^{-in\varphi_k}$$

avec $n \in [1,N]$

On obtient un système d'équations linéaires dans le domaine des fréquences pour chaque harmonique n :

$$
\begin{vmatrix} S_{1_n} \\ S_{2_n} \\ \cdots \\ S_{k_n} \end{vmatrix}
=
\begin{vmatrix} \cos\varphi_1 & \sin\varphi_1 & e^{-in\varphi_1} \\ \cos\varphi_2 & \sin\varphi_2 & e^{-in\varphi_2} \\ \cdots & \cdots & \cdots \\ \cos\varphi_k & \sin\varphi_k & e^{-in\varphi_k} \end{vmatrix}
\cdot
\begin{vmatrix} X_n \\ Y_n \\ R_n \end{vmatrix}
$$

Qui s'écrit matriciellement :

$$\vec{S}_n = H_n.\vec{X}_n$$

Ceci est résolu par les moindres carrés pour chaque harmonique $n$ :

$\hat{\vec{X}}_n = (H_n{}^T \cdot H_n)^{-1} H_n{}^T \cdot \vec{S}_n$ avec $\hat{\vec{X}}_n$ un estimateur de $\vec{X}_n$
où $N_n = H_n{}^T \cdot H_n$ est la matrice normale
et $\vec{E}_n = H_n \cdot \hat{\vec{X}}_n - \vec{S}_n$ est l'erreur résiduelle.

On choisit les angles $\varphi_k$ pour éviter une perte d'harmonique à l'ordre n selon le critère suivant:

$$Det(N_n) \neq 0, \forall\, n$$

Concrètement, les $\varphi_k$ ont des valeurs fixes dans le dispositif 1 qui ne varient pas et restent les même pendant la rotation de l'objet 5 autour de l'axe 4. En pratique, on a de préférence :

$\varphi_1$= 0.00000 radians
$\varphi_2$= 0.95720 radians
$\varphi_3$= 2.35619 radians
$\varphi_4$= 3.60792 radians

On va chercher à minimiser $\vec{e}_k$ en faisant varier les $\varphi_k$: $\vec{e}_k(\varphi) \overset{TF}{\Leftrightarrow} \vec{E}_n$ erreur résiduelle dans le domaine spatial. $\vec{e}_k = f(s_k, \varphi_k)$ dans le domaine angulaire $\widehat{\vec{\varphi}_k} \leftrightarrow min(\vec{e}_k)$.

Puis, l'algorithme de résolution est le suivant:

- Choix des $\varphi_k$ nominaux
- Transformée de Fourier des lectures des $k$ capteurs 7:
-

$$\vec{S}_k(\varphi) \overset{TF}{\Rightarrow} \vec{S}_n$$

- Départ boucle optimisation: on fait varier les $\varphi_k$ pour avoir $\sigma(\vec{e}_k)$ minimum, où $\sigma$ est l'écart-type centré de $\vec{e}_k(\varphi)$

  • Pour chaque harmonique *n* :

    • Calcul de la matrice $H_n = f(\varphi_k)$
    • Calcul des coefficients $\hat{X}_n = (H_n{}^T{\cdot}H_n)^{-1} H_n{}^T{\cdot}\vec{S}_n$
    • Calcul de l'erreur résiduelle dans le domaine fréquentiel $\vec{E}_n = H_n{\cdot}\hat{X}_n - \vec{S}_n$

  • Construction du vecteur $\vec{E}$ dont les composantes sont les $\vec{E}_n$ avec $n \in \left\{2, ..., \dfrac{N}{2} + 1\right\}$ et $\vec{E}$ est une Transformée de Fourier (TF) d'un signal hermitien $\vec{e}_k(\varphi)$.

  • Calcul de l'erreur résiduelle dans le domaine spatial

$$\vec{E} \underset{\Rightarrow}{TF^{-1}} \vec{e}_k(\varphi)$$

  • Calcul de l'écart-type de $\sigma(\vec{e}_k)$

    - Fin de la boucle optimisation
    - Calcul des coefficients $\hat{X}_n = (H_n{}^T.H_n)^{-1}H_n{}^T.\vec{S}_n$ définitifs

    - Construction du vecteur $\vec{X}$ dont les composantes sont les $\vec{X}_n$ avec $n \in \left\{2, ..., \dfrac{N}{2} + 1\right\}$ et $\vec{X}$ est une TF d'un signal hermitien $\hat{x}(\varphi)$.
    - Calcul de la solution dans le domaine spatial

$$\hat{X} \underset{\Rightarrow}{TF^{-1}} \hat{x}(\varphi) \approx \begin{bmatrix} x(\varphi) \\ y(\varphi) \\ dr(\varphi) \end{bmatrix}$$

Le calcul des coordonnées polaires des points $\vec{P}_{c_n}$ de l'objet 5 pour chaque niveau *h* (c'est-à-dire de la ligne

$$\vec{P}_{c_\varphi} = \begin{bmatrix} r_o + dr(\varphi) \\ \varphi \\ h \end{bmatrix}$$

de contour 14 dans le plan de mesure de hauteur h) est alors: avec $r_o$ le rayon nominal de la partie quasi cylindrique de l'objet 5 et dr les écarts de la surface extérieure de cette partie quasi cylindrique par rapport à ce rayon nominal.

Ainsi, selon l'invention, on remarque que l'on peut faire la différence entre :

- La variation de la distance entre un capteur 7 et la surface de l'objet 5 due à une variation de cette surface, et
- La variation de la distance entre un capteur 7 et la surface de l'objet 5 due à une variation de position de l'axe de rotation 4 de l'objet 5.

En comparant, pour des données acquises au même moment, les variations de position de l'axe de rotation 4 de l'objet 5 pour deux plans de mesure distincts 81 et 82, on est en outre capable de dire si cette variation de position est une variation de position par translation ou par rotation :

- par exemple, si pendant un intervalle de temps $\delta t$ entre deux mesures par les capteurs 7, l'axe de rotation 4 se déplace dans la plan 81, mais pas dans le plan 82, on a une rotation de l'axe 4 autour d'un axe perpendiculaire à l'axe 4 et passant par le plan 82, et
- par exemple, si pendant un intervalle de temps $\delta t$ entre deux mesures par les capteurs 7, de l'axe de rotation 4 se déplace exactement de la distance et selon la même direction dans les plans 81 et 82, on a uniquement une translation de l'axe 4.

On note en outre que la séparation entre :

- la variation de la distance entre un capteur 7 et la surface de l'objet 5 due à une variation de cette surface, et
- la variation de la distance entre un capteur 7 et la surface de l'objet 5 due à une variation de position de l'axe de rotation 4 de l'objet 5,

est réalisable avec seulement trois capteurs 7 par plan de mesure 81 ou 82, comme par exemple aussi décrit dans le document CN103363921A.

Acquisition des images tridimensionnelles 191 à 196

Ce procédé comprend, pour chaque plan (respectivement 81 ou 82) de mesure parmi au moins un des plans de mesure, une acquisition, par le capteur d'image (respectivement 151 ou 152), d'une image tridimensionnelle 191 d'une face de l'objet 5, ce plan de mesure étant imagé sur cette image tridimensionnelle 191, et une réitération de cette acquisition d'image 192 à 196 pour plusieurs valeurs de rotation de l'objet 5 autour de son axe de rotation 4 face à ce capteur d'image (respectivement 151 ou 152) dans le référentiel d'image 16 dans lequel le capteur d'image (respectivement 151 ou 152) est fixe.

Chaque image tridimensionnelle 191 à 196 peut imager en outre tout ou partie d'une face de l'échantillon 23 porté par l'objet 5.

Au sein du capteur d'image 151 ou 152, on se sert :

- de l'interféromètre à lumière blanche pour un objet 5 et/ou échantillon 23 réfléchissant, et
- du microscope à contraste de foyer pour un objet 5 et/ou échantillon 23 structuré mais non réfléchissant.

Les données de chaque image tridimensionnelle 191 à 196 numéro m pour le plan de mesure situé à la hauteur

$$\vec{p} = \begin{bmatrix} c \\ l \\ v \end{bmatrix},$$

h ont la formes de tableaux $I_{h,m}$ constitué de points ou pixels $\vec{p}$ définis par            avec:

- $v$, un scalaire (en nm)
- $(c,l)$ les coordonnés du pixel dans le système local de l'image et dont l'origine est le centre de l'image
- $\varphi_m = \frac{2\pi}{M} m$, avec le nombre entier $m \in [0, M-1]$, $\varphi_m$ étant l'angle de rotation de l'objet 5 à la prise de l'image $I_{h,m}$ par le capteur d'image à la hauteur h (capteur 151 pour h=z1 et capteur 152 pour h=z2), M-1 étant le nombre d'images prises par ce capteur d'image en tout, M-1 étant typiquement égal à quelques dizaines (typiquement entre 20 et 30) pour une partie quasi cylindrique de l'objet 5 ayant environ 3 millimètres de diamètre et avec chaque image ayant une largeur d'environ 500 micromètres ; seules six images sont représentées sur la figure 6 pour ne pas la surcharger,
- $h \in (z_1, z_2)$ les deux hauteurs de mesure sur l'objet 5,
- Les coordonnées $(c,l)$ sont supposées en dimension métriques. Elles sont calculées en fonction du champ du capteur (respectivement 151 ou 152), du nombre et de la taille des pixels.

La largueur de chaque image tridimensionnelle 191 à 196 le long de sa coordonnée c est comprise typiquement entre 100 $\mu$m et 1000 $\mu$m, typiquement égale à 500 $\mu$m.

La largueur de chaque image tridimensionnelle 191 à 196 le long de sa coordonnée l est comprise typiquement entre 100 $\mu$m et 1000 $\mu$m, typiquement égale à 300 $\mu$m.

La résolution spatiale latérale de chaque image tridimensionnelle 191 à 196 le long de sa coordonnée c (dans le plan des figures 7 à 10) est inférieure ou égale à 10 $\mu$m.

La résolution spatiale latérale de chaque image tridimensionnelle 191 à 196 le long de sa coordonnée l (dans le plan des figures 8 et 10, perpendiculairement au plan des figures 7 et 9) est inférieure ou égale à 10 $\mu$m.

La résolution spatiale longitudinale de chaque image tridimensionnelle 191 à 196 le long de sa coordonnée v (dans le plan des figures 7 et 11, perpendiculairement au plan des figures 8 et 10) est inférieure à 100 nm, idéalement inférieure ou égale à 10 nm.

Les données caractérisant spatialement la surface extérieure de l'objet 5 sont :

- $(r, \varphi, z)$, ses coordonnées cylindriques

- (*x*,*y*,*z*), ses coordonnées cartésiennes

Synchronisation

Une synchronisation entre les mesures suivantes est assurée par le système de Contrôle-Commande 10:

- Circularités en $z_1$ et $z_2$ par capteurs de distance 7 (acquisition des données de distance), et
- Acquisition des images tridimensionnelles (trois dimensions spatiales) par le capteur d'images 151 et/ou152, incluant les zones de mesure de circularité

Les moyens de commande 10 comprennent au moins une interface 30 de contrôle et de transfert de données, par exemple de type TCPIP.

Par contre, en référence aux figures 12 et 13, si la partie cylindrique de l'objet 5 présente une inclinaison par rapport à la direction de l'axe de rotation 4, alors l'objet 5 décrit un cône de révolution sur 360° de rotation lorsqu'il explore différentes positions 38, 39, 40, 41 autour de l'axe 4. On doit recentrer chaque section sur l'axe de rotation 4 pour effectuer des mesures. Il y a donc désynchronisation des mesures entre les différents plans de mesure 81, 82 :

- La figure 12 illustre la position de l'axe de rotation 4 par rapport à l'objet 5 pour les mesures par les capteurs 71 dans le plan 81 ; cette configuration est obtenue en faisant une ou plusieurs série(s) de mesures de distance par les capteurs 71 avec une rotation de l'objet 5 atour de son axe 4 et en minimisant l'harmonique d'ordre 1 de la décomposition de Fourier des lectures des capteurs 71 ; et
- La figure 13 illustre la position de l'axe de rotation 4 par rapport à l'objet 5 pour les mesures par les capteurs 72 dans le plan 82 ; cette configuration est obtenue en faisant une ou plusieurs série(s) de mesures de distance par les capteurs 72 avec une rotation de l'objet 5 atour de son axe 4 et en minimisant l'harmonique d'ordre 1 de la décomposition de Fourier des lectures des capteurs 72.

L'inclinaison de la partie cylindrique de l'objet 5 par rapport à l'axe de rotation 4 est minimisée par moyens mécaniques manuels des rotations autour respectivement des axes X et Y ou par usinage.

On mesure l'inclinaison résiduelle de la partie cylindrique de l'objet 5 par rapport à l'axe de rotation 4 par la mesure de l'excentricité d'un cercle ou ligne de contour 14, 142 d'un plan de mesure respectivement 81 ou 82 lorsque l'autre cercle ou ligne de contour 14, 141 de l'autre plan de mesure respectivement 82 ou 81 est centré.

Orientation des images tridimensionnelles d'un même plan de mesure entre elles ; correction de l'inclinaison résiduelle et du « wobble »

Ce procédé comprend, avant l'assemblage des différentes images tridimensionnelles d'un même plan de mesure (respectivement 81 ou 82), une orientation (dans le référentiel d'image 9), par les moyens 12, de chaque image tridimensionnelle de ce plan de mesure par rapport aux autres images tridimensionnelles de ce même plan de mesure, cette orientation étant déterminée en fonction d'une variation d'inclinaison de l'objet 5 par rapport au référentiel d'image 9 lors de l'acquisition de ces différentes images tridimensionnelles. Cette variation d'inclinaison est mesurée selon deux angles dont :

- un angle autour de l'axe optique 21 du capteur d'images (respectivement 151 ou 152) ayant fait l'acquisition de ces images tridimensionnelles, et
- un angle autour d'un axe 22 perpendiculaire à l'axe 21 et sensiblement perpendiculaire à l'axe de rotation 4 ou d'élongation 20.

On procède de la manière suivante pour la correction du « wobble » (i.e. de « l'oscillation » de l'objet 5 ou de la variation d'inclinaison de l'objet 5 dans le référentiel 9 et/ou 16).

Pour chaque niveau h, les images $I_{h,m}$ du capteur d'image situé à la hauteur h (respectivement capteur 151 pour h=z1 et capteur 152 pour h=z2) sont orientées dans l'espace avec l'inclinaison de la partie cylindrique de l'objet 5 et les variations angulaires de l'axe de rotation 4 $w_x(\varphi_m)$ et $w_y(\varphi_m)$ calculées à partir des mesures des capteurs de distances 7 avec :

$tgw_y(\varphi_m) = (dr_{z_2}(\varphi_m) - dr_{z_1}(\varphi_m))/(z_2-z_1)$, les $dr_{z_i}(\varphi_m)$ étant ceux mesurés par les capteurs de distance 7 ou calculés à partir de ceux-ci dans le plan vertical contenant l'axe optique du capteur d'image (respectivement 151 ou 152) à la prise de vue d'indice $m$ ;

$$\text{tg } w_x(\varphi_m) = \left( dr_{z_2}\left(\varphi_m + \frac{\pi}{2}\right) - dr_{z_1}\left(\varphi_m + \frac{\pi}{2}\right) \right)/(z_2 - z_1), \text{ les } dr_{z_i}\left(\varphi_m + \frac{\pi}{2}\right) \text{ étant}$$

ceux mesurés par les capteurs de distance 7 ou calculés à partir de ceux-ci dans le plan vertical perpendiculaire à l'axe optique du capteur d'image (respectivement 151 ou 152) à la prise de vue d'indice $m$.

$i_x$ et $i_y$, les composantes de l'angle d'inclinaison de la partie cylindrique de l'objet 5 par rapport à l'axe de rotation 4 selon les directions radiale et longitudinale du capteur d'image (respectivement 151 ou 152).

$$\vec{p} = \begin{bmatrix} c \\ l \\ v \end{bmatrix}$$

Les sommes de ces contributions selon ces axes sont : $a_x = i_x + w_x$ et $a_y = i_y + w_y$ Chaque pixel de l'image $I_{h,m}$ subit les transformations suivantes :

$$\vec{p}' = R_y \cdot \vec{p} \quad \text{avec} \quad R_y = \begin{bmatrix} 1 & 0 & 0 \\ 0 & 1 & 0 \\ 0 & \tan a_y & 1 \end{bmatrix}$$

$$\vec{p}'' = R_x \cdot \vec{p}' \quad \text{avec} \quad R_x = \begin{bmatrix} \cos a_x & \sin a_x & 0 \\ -\sin a_x & \cos a_x & 0 \\ 0 & 0 & 1 \end{bmatrix}$$

Ou alors :
$\vec{p}'' = R_1 R_2 R_3 \cdot \vec{p}'$, les $R_i$ étant des matrices de cisaillement (ou « shearing matrices ») d'angle $a_y$ pour le respect des pixels.

Les étapes suivantes décrivent la procédure à chacun des niveaux $h = z_1$ et $h = z_2$. On omet à partir d'ici l'indice h.

Pour le calage des images dans le système de coordonnées de l'objet 5, afin d'être dans le système $(x,y,z)$ de l'objet 5, chaque image $I_m$ subit :

$$\vec{p}''' = R_z \cdot \vec{p}'' + \vec{V} \quad \text{avec } R_z = \begin{bmatrix} \cos\varphi_m & -\sin\varphi_m & 0 \\ \sin\varphi_m & \cos\varphi_m & 0 \\ 0 & 0 & 1 \end{bmatrix}, \quad \vec{V} = \begin{bmatrix} r_0 \cos\varphi_m \\ -r_0 \sin\varphi_m \\ 0 \end{bmatrix}$$

et $r_o$ le rayon nominal du cylindre.

$$\begin{bmatrix} r \\ \varphi \\ z \end{bmatrix} = \begin{bmatrix} \sqrt{x^2 + y^2} \\ \text{atan}\left(\frac{y}{x}\right) \\ z \end{bmatrix}.$$

L'image $I_m$ est convertie en coordonnées cylindriques :       Le pixel s'écrit alors

$$\vec{p}''' = \begin{bmatrix} r \\ \varphi \\ z \end{bmatrix}.$$

Assemblage des images tridimensionnelles d'un même plan de mesure

Ce procédé comprend, pour chaque plan de mesure (respectivement 81 ou 82) ayant fait l'objet d'acquisition d'images tridimensionnelles 191 à 196, un assemblage (par les moyens 13) de différentes images tridimensionnelles acquises pour ce plan de mesure (respectivement 81 ou 82), de manière à obtenir des données tridimensionnelles de la surface de contour 18 de l'objet 5 (et éventuellement de tout ou partie de l'échantillon 23), l'assemblage comprenant une définition de positions relatives de ces différentes images au moyen des données représentatives de la ligne de contour 14 contenue dans ce même plan de mesure (respectivement 81 ou 82).

Une première définition des positions relatives des images tridimensionnelles peut être effectuée selon l'axe Z si le capteur 25 de hauteur qui cible l'objet 5 repère une variation de la hauteur de l'objet 5 entre les différentes images tridimensionnelles acquises.

La définition des positions relatives des images tridimensionnelles comprend en outre, de manière plus fine, pour chaque image tridimensionnelle d'un plan de mesure (respectivement 81 ou 82), un algorithme des moindres carrés minimisant un écart entre :

- les données représentatives de la ligne de contour 14 de l'objet 5 contenue dans ce plan de mesure (respectivement 81 ou 82), et
- cette image tridimensionnelle de ce plan de mesure (respectivement 81 ou 82).

Voici de manière plus détaillée comment on procède.

On commence par une corrélation 2D d'images tridimensionnels par couple d'images successives d'indice m et m+1 (ou M et 0): chaque couple d'images $I_m$ et $I_{m+1}$ $m \in [0,M-1]$, d'un niveau $h$ présente une zone commune qu'on cale l'une par rapport à l'autre par intercorrélation :

$$\vec{p}''' = \begin{bmatrix} r \\ \varphi \\ z \end{bmatrix}.$$

- l'opération s'effectue sur les pixels

$$\vec{V}_{d_{m+1}} = \begin{bmatrix} 0 \\ \varphi_{d_{m+1}} \\ z_{d_{m+1}} \end{bmatrix}$$

- le vecteur décalage $\qquad$ est calculé tel que $C(d\varphi,dz)$ est maximum en $(\varphi_{d_{m+1}},Z_{d_{m+1}})$ avec :

$$C(d\varphi,dz) = \frac{\sum_\varphi \sum_z I_m(\varphi,z) I_{m+1}(\varphi+d\varphi,z+dz)}{\sqrt{\sum_\varphi \sum_z I_m(\varphi,z)^2} \sqrt{\sum_\varphi \sum_z I_{m+1}(\varphi,z)^2}}$$

○

○ Le traitement *est effectué jusqu'à* $\vec{V}_{d_M}$, décalage entre $I_{M-1}$ et $I_0$.

On calcule la fermeture des décalages d'images : la somme des vecteurs décalage doit être nulle :

$$\vec{r} = \sum_m \vec{V}_{d_m} = \begin{bmatrix} 0 \\ \sum_m \varphi_{d_m} \\ \sum_m z_{d_m} \end{bmatrix} = \begin{bmatrix} 0 \\ 0 \\ 0 \end{bmatrix}$$

On calcule les coordonnées cylindriques des pixels d'images : si cette somme est non nulle, on compense le résidu $\vec{r}$ sur les vecteurs $\vec{V}_{d_i}$ par valeur entière de pixels. Pour chaque image $I_m$, $m \in [1,M-1]$, les pixels $\vec{p}'''$ sont corrigés en coordonnées cylindriques du vecteur décalage et du résidu $\vec{r}_m$ éventuel : $\vec{p}'''' = \vec{p}''' + \sum_{i=1}^m (\vec{V}_{d_i} - \vec{r}_i)$ par valeur entière de pixels.

Les points de calage issus de la mesure de circularité s'écrivent sous la forme :

$$\vec{P}_{c_\varphi} = \begin{bmatrix} r_{c_\varphi} \\ \varphi \\ h \end{bmatrix} \text{ avec } h \in (z_1, z_2).$$

Pour le calage des images sur les points $\vec{P}_{c_\varphi}$ : chaque image $I_m$ est calée en $r$ par comparaison des $r_{c_\varphi}$ des $J$ points $\vec{P}_{c_\varphi}$ communs à l'image en zones $dS$ en regard.

La dimension $dS$ correspond au diamètre d'intégration $\phi_{int}$ du capteur de distance :

$$\phi_{dS} = \phi_{int}$$

Sur ces zones *dS* centrées sur les $\vec{P}_{c_\varphi}$, on moyenne les $r_{dS}$ des pixels correspondants. On minimise alors $\Sigma j(r_{dS} - r_{c_\varphi})^2$ par image pour calculer une correction *dr* de l'image.

Les coordonnées définitives des pixels image en coordonnées cylindriques sont:

$$\vec{p}''''' = \vec{p}'''' + \begin{bmatrix} dr \\ 0 \\ 0 \end{bmatrix}.$$

Les zones communes à deux images sont moyennées en *r* par pixel.

On obtient alors un modèle numérique de la surface extérieure d'une partie d'intérêt de l'objet 5 ou de tout l'objet 5 (avec éventuellement tout ou partie de l'échantillon 23).

L'ensemble des étapes, à partir des acquisitions de données de distance et des images tridimensionnelles jusqu'à l'obtention du modèle numérique (c'est-à-dire des données tridimensionnelles de la surface de contour 18) de l'objet 5 et éventuellement de tout ou partie de l'échantillon 23 dure typiquement environ 15 à 30 minutes.

Utilisation du modèle numérique et avantages du dispositif 1 selon l'invention et du procédé selon l'invention mis en oeuvre par le dispositif 1.

On peut ensuite prendre l'objet 5 et le placer par exemple dans un appareil générant un faisceau de radiation (corpusculaire ou électromagnétique) ou dans un Microscope Electronique à Balayage (MEB) ou dans tout autre appareil. L'identification d'une caractéristique clé (par exemple marque ou gravure sur la partie quasi cylindrique de l'objet 5) entre une position dans cet appareil et ce modèle numérique obtenu par assemblage des différentes images tridimensionnelles 191 à 196 permet de s'orienter librement sur l'objet 5, sans utilisation d'un objet de métrologie.

Ce modèle numérique est transféré dans un autre appareil ou comme système de coordonnées pour attribuer a posteriori des données d'analyse multimodales et multi-échelles.

Ce modèle numérique permet de connaître la forme exacte de la surface extérieure d'une partie d'intérêt de l'objet 5 ou de tout l'objet 5 (avec éventuellement tout ou partie de l'échantillon 23) pour pouvoir positionner cet échantillon avec précision, par exemple par rapport à un faisceau de radiation (corpusculaire ou électromagnétique).

Un avantage de l'approche selon l'invention est de contraindre le nombre de capteurs nécessaire sur l'appareil expérimental (par exemple une ligne de lumière ou un MEB), en laissant plus d'espace autour de l'ensemble 5, 23 pour optimiser l'angle solide d'autres détecteurs, tel que par exemple un détecteur de fluorescence.

La combinaison avec des méthodes optiques (WLI et contraste de foyer) est nouvelle et permet de développer un modèle numérique plus rapidement et plus complet.

Un avantage clé de l'invention est de gagner du temps sur des expériences: on peut trouver un endroit d'intérêt sur la surface de l'ensemble 5, 23 sans délai, grâce au modèle numérique 3D. Ceci représente une réduction de coût considérable, non seulement dans le cas des expériences dans un synchrotron, mais aussi pour d'autres types de microscopies ou d'analyses complémentaires multimodales et multi-échelles. L'invention permet également d'automatiser certaines expériences, au niveau des zones d'intérêt à analyser.

Enfin, on remarque que dans le dispositif 1 :

- pour chaque plan 81 ou 82, le nombre d'images tridimensionnelles M-1 prises par le capteur d'image respectivement 151 ou 152 est inférieure au nombre N de points de mesure de chaque capteur respectivement 71 ou 72 de ce plan de mesure pour obtenir des données tridimensionnelles (i.e. un modèle numérique) d'une surface de contour 18 de l'objet 5 (et éventuellement de tout ou partie de l'échantillon 23), et/ou

- pour chaque plan 81 ou 82, chaque capteur respectivement 71 ou 72 a une résolution spatiale longitudinale (typiquement inférieure ou égale à 1 nanomètre) pour sa mesure de distance (entre une surface extérieure de l'objet 5 et ce capteur de distance) inférieure à la résolution spatiale longitudinale (typiquement inférieure ou égale à 10 nanomètres) de la mesure de hauteur de motifs de la surface extérieure de l'objet 5 par le capteur respectivement 151 ou 152 le long de la coordonnée v, c'est-à-dire le long d'un axe reliant cette surface extérieure au capteur respectivement 151 ou 152.

Selon l'invention, on passe par les données de distance des capteurs 7 pour séparer, par rapport au profil réel de l'objet 5, les erreurs dues à la variation d'inclinaison et/ou de translation de l'axe de rotation 4.

On utilise en outre les données de distance des capteurs 7 pour assembler les images tridimensionnelles.

Selon l'invention, on gagne ainsi :

- en temps, car il est plus rapide de suréchantillonner avec précision l'objet 5 avec des données unidimensionnelles de distance des capteurs 7 (qui sont très rapides à acquérir) plutôt qu'avec des images tridimensionnelles des capteurs 151, 152 afin de faire la séparation d'erreurs, c'est-à-dire mesurer la convolution entre la forme de l'objet 5 et les erreurs de la rotation autour de l'axe 4;

- en argent, car il est plus économique d'avoir au moins 3 capteurs 7 de données unidimensionnelles de distance par plan 81 ou 82 plutôt qu'au moins 3 interféromètres à lumière blanche et/ou au moins trois microscopes à contraste de foyer par plan 81 ou 82 pour faire cette séparation d'erreurs, et

- en résolution, car :

  ∘ on gagne en résolution pour la séparation d'erreurs, les capteurs 7 ayant une meilleure résolution spatiale longitudinale que les capteurs 151 et 152, et

  ∘ on gagne en résolution pour le modèle numérique (qui est équivalent aux données tridimensionnelles de la surface de contour 18) de l'objet 5 et éventuellement de tout ou partie de l'échantillon 23, car au lieu d'assembler les M-1 images tridimensionnelles 191 à 196 en se basant uniquement sur les points de correspondance entre les couples d'images tridimensionnels 191 à 196 se chevauchant, on dispose de données de repérage supplémentaires sous la forme de la ligne de contour 14 qui peut à faible coût et avec peu de temps être suréchantillonnée avec un grand nombre N de points mesure, et qui en outre est de préférence une ligne fermée ce qui évite ou limite les incohérence d'assemblage (ou « stitching ») quand après avoir assemblé toutes les images 191 à 196 entre elles deux par deux en partant de la première image 191 jusqu'à la dernière image 196 on termine par assembler la dernière image 196 à la première image 191.

Une autre utilisation possible du procédé ou dispositif selon l'invention décrit peut être de caractériser le système de nano-positionnement 3 utilisé y compris le moyen de rotation 31 et/ou de caractériser la stabilité vibrationnelle et thermique du système 3 de nano-positionnement.

Un avantage de l'invention est de pouvoir déterminer la qualité d'un ou plusieurs nano-positionneurs d'une façon concise et rapide. Ceci est aussi intéressant pour des fournisseurs de systèmes de nano-positionnement.

Bien sûr, l'invention n'est pas limitée aux exemples qui viennent d'être décrits et de nombreux aménagements peuvent être apportés à ces exemples sans sortir du cadre de l'invention.

Notamment :

- pour une rotation de l'objet 5 autour d'un axe de rotation 4 par rapport à un référentiel de distance 9 dans lequel les capteurs de distance 7 sont fixes, et /ou
- pour une rotation de l'objet 5 autour de son axe de rotation 4 face au capteur d'image 151 ou 152 dans un référentiel d'image dans lequel ce capteur d'image est fixe,

l'objet 5 peut être fixe par rapport au bâti 17 du dispositif 1 et tous les capteurs 7 et/ou tous les capteurs 151, 152 peuvent être monté en rotation autour de l'axe 4 sur un moyen de rotation (platine de rotation) commun.

En outre, on peut prévoir des modes de réalisation à plus de deux plans de mesure 81, 82.

En outre :

- les mesures par les capteurs 71, 151 ou 72, 152 d'un même plan de mesure 81 ou 82, et/ou
- les mesures par les capteurs 71 et 72 de différents plans de mesures 81 et 82, et/ou
- les mesures par les capteurs 151 et 152 de différents plans de mesures 81 et 82,

sont de préférence synchronisées, mais cela n'est pas obligatoire.

Bien entendu, les différentes caractéristiques, formes, variantes et modes de réalisation de l'invention peuvent être associées les unes avec les autres selon diverses combinaisons dans la mesure où elles ne sont pas incompatibles ou exclusives les unes des autres. En particulier toutes les variantes et modes de réalisation décrits précédemment sont combinables entre eux, sans sortir du cadre de l'invention telle que revendiquée dans les revendications.

## Revendications

1. Procédé de caractérisation en trois dimensions d'un objet (5), comprenant :

- une fourniture de l'objet (5),
- une acquisition de données de distances comprenant :

  ◦ pour au moins deux plans de mesure (81 , 82) distincts, chaque plan de mesure étant équipé d'au moins trois capteurs de distance (71, 72) entourant l'objet, et
  ◦ pour chaque capteur (71 ; 72) de distance de chaque plan de mesure (81 ; 82),

  une mesure d'une donnée de distance représentative d'une distance entre une surface extérieure de l'objet et ce capteur de distance (71 ; 72) mesurée dans le plan de mesure (81 ; 82) du capteur,
- une réitération de l'acquisition de données de distances pour plusieurs valeurs de rotation de l'objet autour d'un axe de rotation (4) par rapport à un référentiel de distance (9) dans lequel les capteurs de distance (71, 72) sont fixes,
- pour chaque plan de mesure (81 ; 82), une obtention de données représentatives d'une ligne de contour (14) de l'objet à partir des données de distances mesurées par tous les capteurs (71 ; 72) de ce plan de mesure et pour différentes valeurs de rotation de l'objet (5) autour de son axe de rotation (4), la ligne de contour (14) étant contenue dans ce plan de mesure (81 ; 82), ladite obtention de données représentatives d'une ligne de contour comprenant une prise en compte d'une variation d'inclinaison et/ou de translation de l'axe de rotation (4) dans le référentiel de distance (9) lors des acquisitions des données de distance,
- pour chaque plan de mesure (81, ; 82) parmi au moins un des plans de mesure, une acquisition, par un capteur d'image (151 ; 152), d'une image tridimensionnelle (191) d'une face de l'objet (5), ce plan de mesure (81 ; 82) étant imagé sur cette image tridimensionnelle (191), et une réitération de cette acquisition d'image (192-196) pour plusieurs valeurs de rotation de l'objet (5) autour de son axe de rotation (4) face à ce capteur d'image (151 ; 152) dans un référentiel d'image (16) dans lequel le capteur d'image (151 ; 152) est fixe,
- pour chaque plan de mesure (81 ; 82) ayant fait l'objet d'acquisition d'images tridimensionnelles (191-196), un assemblage de différentes images tridimensionnelles (191-196) acquises pour ce plan de mesure (81 ; 82), de manière à obtenir des données tridimensionnelles d'une surface de contour (18) de l'objet, l'assemblage comprenant une définition de positions relatives des différentes images (191-196) au moyen des données représentatives de la ligne de contour (14) contenue dans ce plan de mesure (81 ; 82).

2.  Procédé selon la revendication 1, **caractérisé en ce que** la définition des positions relatives des images tridimensionnelles comprend, pour chaque image tridimensionnelle (191 ; 192 ; 193 ; 194 ; 195 ; 196) d'un plan de mesure (81 ; 82), un algorithme des moindres carrés minimisant un écart entre :

    - les données représentatives de la ligne de contour (14) de l'objet contenue dans ce plan de mesure (81 ; 82), et
    - cette image tridimensionnelle (191 ; 192 ; 193 ; 194 ; 195 ; 196) de ce plan de mesure (81 ; 82).

3.  Procédé selon la revendication 1 ou 2, **caractérisé en ce qu'**il comprend, avant l'assemblage des différentes images tridimensionnelles, une orientation de chaque image tridimensionnelle par rapport aux autres images tridimensionnelles, cette orientation étant déterminée en fonction d'une variation d'inclinaison de l'objet (5) par rapport au référentiel d'image (16) lors de l'acquisition de ces différentes images tridimensionnelles.

4.  Procédé selon l'une quelconque des revendications précédentes, **caractérisé en ce que** l'objet s'étend le long d'un axe d'élongation (20), l'axe d'élongation et l'axe de rotation (4) formant un angle inférieur à 0,01 radian.

5.  Procédé selon l'une quelconque des revendications précédentes, **caractérisé en ce que** l'objet est monté sur un support (3) thermiquement stabilisé et monté en rotation autour de l'axe de rotation (4), le procédé comprenant en outre une vérification de la stabilisation d'une température de l'objet avec des variations en dessous d'un seuil d'écart de température.

6.  Procédé selon l'une quelconque des revendications précédentes, **caractérisé en ce que** chaque capteur d'image comprend un interféromètre à lumière blanche et/ou un microscope à contraste de foyer.

7.  Procédé selon l'une quelconque des revendications précédentes, **caractérisé en ce que** les capteurs de distance (71, 72) sont des capteurs interférométriques et les données de distances sont des données interférométriques.

8.  Procédé selon l'une quelconque des revendications précédentes, **caractérisé en ce que** les capteurs de distance et le capteur d'image sont solidaires d'un même bâti (17), l'objet étant monté sur une platine (31) de déplacement agencée pour la rotation de l'objet autour de l'axe de rotation (4) par rapport à ce bâti.

**9.** Dispositif de caractérisation, comprenant :

- une zone d'objet (2),
- des moyens (6, 7, 71, 72) pour acquérir des données de distances, ces moyens d'acquisition de données de distances étant répartis sur au moins deux plans de mesure (81, 82) distincts, chaque plan de mesure (81 ; 82) étant équipé d'au moins trois capteurs de distance (71 ; 72) entourant la zone d'objet, chaque capteur de distance (71 ; 72) étant agencé pour mesurer dans son plan de mesure (81 ; 82) une donnée de distance représentative d'une distance entre :

    • une surface extérieure d'un objet disposé dans la zone d'objet (2) en étant solidaire de la zone d'objet et
    • ce capteur de distance (71 ; 72)

et cela pour différentes valeurs de rotation de la zone d'objet (2) autour d'un axe de rotation (4) par rapport à un référentiel de distance (9) dans lequel les capteurs de distance (71, 72) sont fixes,
- pour chaque plan de mesure (81 ; 82), des moyens (10) pour obtenir des données représentatives d'une ligne de contour (14) de l'objet à partir de données de distances acquises comprenant des données de distances mesurées par tous les capteurs (71 ; 72) de ce plan de mesure (81 ; 82) et pour différentes valeurs de rotation de la zone d'objet (2) autour de son axe de rotation (4), cette ligne de contour étant contenue dans ce plan de mesure (81 ; 82), les moyens d'obtention de données représentatives d'une ligne de contour étant agencés pour une prise en compte d'une variation d'inclinaison et/ou de translation de l'axe de rotation (4) dans le référentiel de distance (9) lors d'acquisitions des données de distance,
- pour chaque plan de mesure (81 ; 82) parmi au moins un des plans de mesure, un capteur d'image (151 ; 152) agencé pour acquérir une image tridimensionnelle (191) d'une face de l'objet disposé dans la zone d'objet (2), ce plan de mesure (81 ; 82) étant imagé sur cette image tridimensionnelle, le capteur d'image étant agencé pour réitérer l'acquisition d'image (192-196) pour plusieurs valeurs de rotation de la zone d'objet (2) autour de son axe de rotation (4) face à ce capteur d'image (151 ; 152) dans un référentiel d'image (16) dans lequel le capteur d'image est fixe,
- pour chaque plan de mesure (81 ; 82) parmi au moins un des plans de mesure, des moyens pour assembler différentes images tridimensionnelles (191-196) acquises pour ce plan de mesure, de manière à obtenir des données tridimensionnelles d'une surface de contour (18) de l'objet, les moyens d'assemblage étant agencés pour définir les positions relatives des différentes images (191-196) au moyen des données représentatives de la ligne de contour (14) contenue dans ce plan de mesure (81 ; 82).

**10.** Dispositif selon la revendication 9, **caractérisé en ce que** les moyens d'assemblage sont agencés pour que la définition des positions relatives des images tridimensionnelles comprend, pour chaque image tridimensionnelle d'un plan de mesure, un algorithme des moindres carrés minimisant un écart entre :

- les données représentatives de la ligne de contour de l'objet contenue dans ce plan de mesure, et
- cette image tridimensionnelle de ce plan de mesure.

**11.** Dispositif selon la revendication 9 ou 10, **caractérisé en ce qu'**il comprend des moyens pour, avant un assemblage de différentes images tridimensionnelles, orienter chaque image tridimensionnelle par rapport aux autres images tridimensionnelles en fonction d'une variation d'inclinaison de la zone d'objet par rapport au référentiel d'image lors de l'acquisition de ces différentes images tridimensionnelles.

**12.** Dispositif selon l'une quelconque des revendications 9 à 11, **caractérisé en ce qu'**il comprend un support pour la zone d'objet, ledit support étant monté en rotation autour de l'axe de rotation, ledit support comprenant des moyens de stabilisation thermique, le dispositif comprenant en outre des moyens de vérification de la stabilisation d'une température de la zone d'objet avec des variations en dessous d'un seuil d'écart de température.

**13.** Dispositif selon l'une quelconque des revendications 9 à 12, **caractérisé en ce que** chaque capteur d'image comprend un interféromètre à lumière blanche et/ou un microscope à contraste de foyer.

**14.** Dispositif selon l'une quelconque des revendications 9 à 13, **caractérisé en ce que** les capteurs de distance sont des capteurs interférométriques et les données de distances sont des données interférométriques.

**15.** Dispositif selon l'une quelconque des revendications 9 à 14, **caractérisé en ce que** les capteurs de distance et le capteur d'image sont solidaires d'un même bâti, la zone d'objet étant montée sur une platine de déplacement agencée pour la rotation de la zone d'objet autour de l'axe de rotation par rapport à ce bâti.

**Patentansprüche**

1.  Verfahren zur dreidimensionalen Charakterisierung eines Objekts (5), umfassend:

    - eine Bereitstellung des Objekts (5),
    - eine Erfassung von Abstandsdaten, umfassend:

        ◦ für mindestens zwei verschiedene Messebenen (81, 82), wobei jede Messebene mit mindestens drei dem Objekt umgebenden Abstandssensoren (71, 72) ausgestattet ist, und
        ◦ für jeden Abstandssensoren (71, 72) jeder Messebene (81, 82) eine Messung eines Abstandsdatums zur Darstellung eines in der Messebene (81, 82) des Sensoren gemessenen Abstands zwischen einer äußeren Oberfläche des Objekts und dem Abstandssensoren (71, 72),

    - eine Wiederholung der Erfassung von Abstandsdaten für mehrere Drehwerte des Objekts um eine Drehachse (4) gegenüber einem Abstandsreferenzsystem (9), in welchem die Abstandssensoren (71, 72) fest angeordnet sind,
    - für jede Messebene (81, 82), ein Herleiten von eine Konturlinie (14) des Objekts darstellenden Daten aus den Abstandsdaten, die durch alle Sensoren (71, 72) dieser Messebene und für verschiedene Drehwerte des Objekts (5) um seine Drehachse (4) gemessen werden, wobei die Konturlinie (14) in dieser Messebene (81, 82) enthalten ist, wobei das Herleiten von eine Konturlinie darstellenden Daten eine Einbeziehung einer Veränderung der Neigung und/oder der Translation der Drehachse (4) in dem Abstand-Referenzsystem (9) bei den Erfassungen der Abstandsdaten umfasst,
    - für jede Messebene (81, 82) unter mindestens einer der Messebenen eine Erfassung eines dreidimensionalen Bildes (191) einer Seite des Objekts (5) durch einen Bildsensor (151, 152), wobei die Messebene (81, 82) auf diesem dreidimensionalen Bild (191) abgebildet ist, und eine Wiederholung dieser Bilderfassung (192-196) für mehrere Drehwerte des Objekts (5) um seine Drehachse (4) gegenüber diesem Bildsensor (151, 152) in einem Bild-Referenzsystem (16), in welchem der Bildsensor (151, 152) ortsfest ist,
    - für jede Messebene (81, 82), die Gegenstand von einer Erfassung von dreidimensionalen Bildern (191-196) wurde, eine Zusammensetzung verschiedener dreidimensionalen, für diese Messebene (81, 82) erzeugten Bilder (191-196), um dreidimensionale Daten einer Konturfläche (18) des Objekts herzuleiten, wobei die Zusammensetzung eine Definition von Positionen der verschiedenen Bilder zueinander (191-196) anhand der die Konturlinie (14) darstellenden Daten umfasst, die in dieser Messebene (81, 82) enthalten ist.

2.  Verfahren nach Anspruch 1, **dadurch gekennzeichnet, dass** die Definition der Positionen der dreidimensionalen Bilder zueinander für jedes dreidimensionale Bild (191, 192, 193, 194, 195, 196) einer Messebene (81, 82) einen Algorithmus der kleinsten Fehlerquadrate umfasst mit möglichst kleinstem Abstand zwischen:

    - den Daten zur Darstellung der Konturlinie (14) des Objekts, die in dieser Messebene (81, 82) enthalten ist, und
    - diesem dreidimensionalen Bild (191, 192, 193, 194, 195, 196) dieser Messebene (81, 82).

3.  Verfahren nach Anspruch 1 oder 2, **dadurch gekennzeichnet, dass** es vor der Zusammensetzung der verschiedenen dreidimensionalen Bilder eine Ausrichtung jedes dreidimensionalen Bildes zu den weiteren dreidimensionalen Bildern umfasst, wobei diese Ausrichtung entsprechend einer Veränderung der Neigung des Objekts (5) im Vergleich zu dem Bild-Referenzsystem (16) bei der Erfassung dieser verschiedenen dreidimensionalen Bilder bestimmt wird.

4.  Verfahren nach einem der vorhergehenden Ansprüche, **dadurch gekennzeichnet, dass** das Objekt sich entlang einer Dehnungsachse (20) erstreckt, wobei die Dehnungsachse und die Drehachse (4) einen Winkeln kleiner 0,01 Radiant bilden.

5.  Verfahren nach einem der vorhergehenden Ansprüche, **dadurch gekennzeichnet, dass** das Objekt auf einem hitzestabilen, um die Drehachse (4) drehbar aufgenommenen Träger (3) aufgenommen ist, wobei das Verfahren außerdem eine Überprüfung der Stabilisierung einer Temperatur des Objekts mit Schwankungen bis unterhalb einer Temperaturdifferenzgrenze umfasst.

6.  Verfahren nach einem der vorhergehenden Ansprüche, **dadurch gekennzeichnet, dass** jeder Bildsensor ein Weißlichtinterferometer und/oder ein Fokuskontrastmikroskop umfasst.

7. Verfahren nach einem der vorhergehenden Ansprüche, **dadurch gekennzeichnet, dass** die Abstandssensoren (71, 72) interferometrische Sensoren und die Abstandsdaten interferometrische Daten sind.

8. Verfahren nach einem der vorhergehenden Ansprüche, **dadurch gekennzeichnet, dass** die Abstandssensoren und der Bildsensor mit einem und dem gleichen Gestell (17) formschlüssig verbunden sind, wobei das Objekt auf einer Bewegungsplatte (31) aufgenommen ist, welche für die Drehung des Objekts um die Drehachse (4) gegenüber diesem Gestell angeordnet ist.

9. Charakterisierungsvorrichtung, umfassend:

   - einen Objektbereich (2),
   - Mittel (6, 7, 71, 72) zur Erfassung von Abstandsdaten, wobei die Mittel zur Erfassung von Abstandsdaten auf mindestens zwei verschiedenen Messebenen (81, 82) verteilt sind, wobei jede Messebene (81, 82) mit mindestens drei den Objektbereich umgebenden Abstandssensoren (71, 72) ausgestattet ist, wobei jeder Abstandssensor (71, 72) derart angeordnet ist, um in seiner Messebene (81, 82) ein Abstandsdatum zu messen, das einen Abstand darstellt zwischen:

      • einer Außenoberfläche eines in dem Objektbereich (2) gelagerten Objekts, wobei es mit dem Objektbereich formschlüssig verbunden ist, und
      • diesem Abstandssensor (71, 72)

   und zwar für verschiedene Drehwerte des Objektbereichs (2) um eine Drehachse (4) im Vergleich zu einem Abstandsreferenzsystem (9), in welchem die Abstandssensoren (71, 72) ortsfest sind,
   - für jede Messebene (81, 82) Mittel (10) zum Herleiten von eine Konturlinie (14) des Objekts darstellenden Daten aus hergeleiteten Abstandsdaten, welche durch alle Sensoren (71, 72) dieser Messebene (81, 82) und für verschiedene Drehwerte des Objektbereichs (2) um seine Drehachse (4) gemessene Abstandsdaten umfasst, wobei die Konturlinie (14) in dieser Messebene (81, 82) enthalten ist, wobei die Mittel zum Herleiten von eine Konturlinie darstellenden Daten derart angeordnet sind, um eine Veränderung der Neigung und/oder der Translation der Drehachse (4) in dem Abstand-Referenzsystem (9) bei Erfassungen von Abstandsdaten einzubeziehen,
   - für jede Messebene (81, 82) unter mindestens einer der Messebenen ein Bildsensor (151, 152), derart angeordnet, um ein dreidimensionales Bild (191) einer Seite des in dem Objektbereich (2) gelagerten Objekts zu erzeugen, wobei diese Messebene (81, 82) auf diesem dreidimensionalen Bild (191) abgebildet ist, wobei der Bildsensor derart angeordnet ist, um die Bilderfassung (192-196) für mehrere Drehwerte des Objektbereichs (2) um seine Drehachse (4) gegenüber diesem Bildsensor (151, 152) in einem Bild-Referenzsystem (16) zu wiederholen, in welchem der Bildsensor (151, 152) ortsfest ist,
   - für jede Messebene (81, 82) unter mindestens einer der Messebenen, Mittel zur Zusammensetzung verschiedener dreidimensionalen, für diese Messebene hergeleiteten Bilder (191-196), um dreidimensionale Daten einer Konturfläche (18) des Objekts herzuleiten, wobei die Mittel zur Zusammensetzung derart angeordnet sind, um die Positionen der verschiedenen Bilder (191-196) zueinander anhand der die Konturlinie (14) darstellenden Daten zu definieren, die in dieser Messebene (81, 82) enthalten ist.

10. Vorrichtung nach Anspruch 9, **dadurch gekennzeichnet, dass** die Mittel der Zusammensetzung derart angeordnet sind, dass die Definition der Positionen der dreidimensionalen Bilder zueinander für jedes dreidimensionale Bild einer Messebene einen Algorithmus der kleinsten Fehlerquadrate umfasst, mit möglichst kleinstem Abstand zwischen:

    - den Daten zur Darstellung der Konturlinie des Objekts, die in dieser Messebene enthalten ist, und
    - diesem dreidimensionalen Bild dieser Messebene.

11. Vorrichtung nach Anspruch 9 oder 10, **dadurch gekennzeichnet, dass** sie Mittel umfasst, um vor einer Zusammensetzung von verschiedenen dreidimensionalen Bildern jedes dreidimensionale Bild zu den weiteren dreidimensionalen Bildern entsprechend einer Veränderung der Neigung des Objektbereichs im Vergleich zu dem Bild-Referenzsystem bei der Erfassung dieser verschiedenen dreidimensionalen Bilder auszurichten.

12. Vorrichtung nach einem der Ansprüche 9-11, **dadurch gekennzeichnet, dass** sie einen Träger für den Objektbereich umfasst, wobei der Träger drehbar um die Drehachse aufgenommen ist, wobei der Träger Mittel zur Hitzestabilisierung umfasst, wobei das Verfahren außerdem Mittel zur Überprüfung der Stabilisierung einer Temperatur des Objektbereichs mit Schwankungen bis unterhalb einer Temperaturdifferenzgrenze umfasst.

**13.** Vorrichtung nach einem der Ansprüche 9-12, **dadurch gekennzeichnet, dass** jeder Bildsensor ein Weißlichtinterferometer und/oder ein Fokuskontrastmikroskop umfasst.

**14.** Vorrichtung nach einem der Ansprüche 9-13, **dadurch gekennzeichnet, dass** die Abstandssensoren interferometrische Sensoren und die Abstandsdaten interferometrische Daten sind.

**15.** Vorrichtung nach einem der Ansprüche 9-14, **dadurch gekennzeichnet, dass** die Abstandssensoren und der Bildsensor mit einem und dem gleichen Gestell formschlüssig verbunden sind, wobei der Objektbereich auf einer Bewegungsplatte aufgenommen ist, welche für die Drehung des Objektbereichs um die Drehachse gegenüber diesem Gestell angeordnet ist.

**Claims**

**1.** Method for the three-dimensional characterization of an object (5), comprising:

- providing the object (5),
- acquiring distance data comprising:

  ◦ for at least two different measurement planes (81 , 82), each measurement plane being equipped with at least three distance sensors (71, 72) surrounding the object, and
  ◦ for each distance sensor (71; 72) of each measurement plane (81; 82),

  measuring an item of distance data representative of a distance between an external surface of the object and this distance sensor (71; 72) measured in the measurement plane (81; 82) of the sensor,
- repeating the acquisition of distance data for several values of rotation of the object about an axis of rotation (4) with respect to a distance frame of reference (9) in which the distance sensors (71, 72) are fixed,
- for each measurement plane (81; 82), obtaining data representative of a contour line (14) of the object from the distance data measured by all the sensors (71; 72) of this measurement plane and for different values of rotation of the object (5) about its axis of rotation (4), the contour line (14) being contained within this measurement plane (81; 82), said obtaining of data representative of a contour line comprising taking into account a variation of inclination and/or of translation of the axis of rotation (4) in the distance frame of reference (9) during acquisitions of distance data,
- for each measurement plane (81; 82) among at least one of the measurement planes, acquiring, using an image sensor (151; 152), a three-dimensional image (191) of one face of the object (5), this measurement plane (81; 82) being imaged on this three-dimensional image (191), and repeating this image acquisition (192-196) for several values of rotation of the object (5) about its axis of rotation (4) facing this image sensor (151; 152) in an image frame of reference (16) in which the image sensor (151; 152) is fixed,
- for each measurement plane (81; 82) having been the subject of the acquisition of three-dimensional images (191-196), stitching different three-dimensional images (191-196) acquired for this measurement plane (81; 82), so as to obtain three-dimensional data of a contour surface (18) of the object, the stitching comprising a definition of relative positions of the different images (191-196) by means of the data representative of the contour line (14) contained in this measurement plane (81; 82).

**2.** Method according to claim 1, **characterized in that** the definition of the relative positions of the three-dimensional images comprises, for each three-dimensional image (191; 192; 193; 194; 195; 196) of a measurement plane (81; 82), a least squares algorithm minimizing a difference between:

- the data representative of the contour line (14) of the object contained in this measurement plane (81; 82), and
- this three-dimensional image (191; 192; 193; 194; 195; 196) of this measurement plane (81; 82).

**3.** Method according to claim 1 or 2, **characterized in that** it comprises, before the stitching of the different three-dimensional images, an orientation of each three-dimensional image with respect to the other three-dimensional images, this orientation being determined as a function of a variation of inclination of the object (5) with respect to the image frame of reference (16) during the acquisition of these different three-dimensional images.

4. Method according to any one of the preceding claims, **characterized in that** the object extends along an axis of elongation (20), the axis of elongation and the axis of rotation (4) forming an angle of less than 0.01 radian.

5. Method according to any one of the preceding claims, **characterized in that** the object is mounted on a thermally stabilized support (3) and mounted in rotation about the axis of rotation (4), the method comprising moreover a verification of the stabilization of a temperature of the object with variations below a temperature variance threshold.

6. Method according to any one of the preceding claims, **characterized in that** each image sensor comprises a white-light interferometer and/or a focal contrast microscope.

7. Method according to any one of the preceding claims, **characterized in that** the distance sensors (71, 72) are interferometric sensors and the distance data are interferometric data.

8. Method according to any one of the preceding claims, **characterized in that** the distance sensors and the image sensor are firmly fixed to one and the same frame (17), the object being mounted on a positioning stage (31) arranged for the rotation of the object about the axis of rotation (4) with respect to this frame.

9. Characterization device, comprising:

- an object zone (2),
- means (6, 7, 71, 72) for acquiring distance data, these means for acquiring distance data being distributed over at least two different measurement planes (81, 82), each measurement plane (81; 82) being equipped with at least three distance sensors (71; 72) surrounding the object zone, each distance sensor (71; 72) being arranged in order to measure in its measurement plane (81; 82) an item of distance data representative of a distance between:

   • an external surface of an object placed in the object zone (2) and being firmly fixed to the object zone and
   • this distance sensor (71; 72)

and this for different values of rotation of the object zone (2) about an axis of rotation (4) with respect to a distance frame of reference (9) in which the distance sensors (71, 72) are fixed,
- for each measurement plane (81; 82), means (10) for obtaining data representative of a contour line (14) of the object from acquired distance data comprising distance data measured by all the sensors (71; 72) of this measurement plane (81; 82) and for different values of rotation of the object zone (2) about its axis of rotation (4), this contour line being contained within this measurement plane (81; 82), the means for obtaining data representative of a contour line being arranged in order to take account of a variation of inclination and/or of translation of the axis of rotation (4) in the distance frame of reference (9) during acquisitions of the distance data,
- for each measurement plane (81 ; 82) among at least one of the measurement planes, an image sensor (151; 152) arranged in order to acquire a three-dimensional image (191) of one face of the object placed in the object zone (2), this measurement plane (81; 82) being imaged on this three-dimensional image, the image sensor being arranged in order to repeat the image acquisition (192-196) for several values of rotation of the object zone (2) about its axis of rotation (4) facing this image sensor (151; 152) in an image frame of reference (16) in which the image sensor is fixed,
- for each measurement plane (81; 82) among at least one of the measurement planes, means for stitching different three-dimensional images (191-196) acquired for this measurement plane, so as to obtain three-dimensional data of a contour surface (18) of the object, the stitching means being arranged in order to define the relative positions of the different images (191-196) by means of the data representative of the contour line (14) contained within this measurement plane (81; 82).

10. Device according to claim 9, **characterized in that** the stitching means are arranged so that the definition of the relative positions of the three-dimensional images comprises, for each three-dimensional image of a measurement plane, a least squares algorithm minimizing a difference between:

- the data representative of the contour line of the object contained in this measurement plane, and
- this three-dimensional image of this measurement plane.

**11.** Device according to claim 9 or 10, **characterized in that** it comprises means for, before a stitching of different three-dimensional images, orientating each three-dimensional image with respect to the other three-dimensional images as a function of a variation of inclination of the object zone with respect to the image frame of reference during the acquisition of these different three-dimensional images.

**12.** Device according to any one of claims 9 to 11, **characterized in that** it comprises a support for the object zone, said support being mounted in rotation about the axis of rotation, said support comprising thermal stabilization means, the device comprising moreover means for verifying the stabilization of a temperature of the object zone with variations below a temperature variance threshold.

**13.** Device according to any one of claims 9 to 12, **characterized in that** each image sensor comprises a white-light interferometer and/or a focal contrast microscope.

**14.** Device according to any one of claims 9 to 13, **characterized in that** the distance sensors are interferometric sensors and the distance data are interferometric data.

**15.** Device according to any one of claims 9 to 14, **characterized in that** the distance sensors and the image sensor are firmly fixed to one and the same frame, the object zone being mounted on a positioning stage arranged for the rotation of the object zone about the axis of rotation with respect to this frame.

FIG. 1

FIG. 2

FIG. 3

FIG. 4

FIG. 5

FIG. 6

FIG. 11

FIG. 7

FIG. 8

FIG. 12

FIG. 9

FIG. 10

FIG. 13

**EP 3 221 660 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 202005018753 U1
- CN 103363921 A